(19) Europäisches Patentamt
European Patent Office
Office européen des brevets

(11) **EP 4 654 456 A1**

(12) **EUROPEAN PATENT APPLICATION**
published in accordance with Art. 153(4) EPC

(43) Date of publication:
**26.11.2025 Bulletin 2025/48**

(21) Application number: **23917521.9**

(22) Date of filing: **19.01.2023**

(51) International Patent Classification (IPC):
**H02M 7/49** *(2007.01)*

(52) Cooperative Patent Classification (CPC):
**H02M 7/49**

(86) International application number:
**PCT/JP2023/001587**

(87) International publication number:
**WO 2024/154308 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Hitachi Mitsubishi Hydro Corporation**
**Tokyo 108-0014 (JP)**
• **Hitachi, Ltd.**
**Tokyo 100-8280 (JP)**

(72) Inventors:
• **BANDO, Akira**
**Tokyo 108-0014 (JP)**
• **WATANABE, Kenta**
**Tokyo 100-8280 (JP)**
• **KIKUI, Takahiko**
**Tokyo 100-8280 (JP)**
• **KIYOFUJI, Yasuhiro**
**Tokyo 100-8280 (JP)**
• **ISHIKAWA, Masakazu**
**Tokyo 100-8280 (JP)**

(74) Representative: **Meissner Bolte Partnerschaft
mbB**
**Patentanwälte Rechtsanwälte**
**Postfach 86 06 24**
**81633 München (DE)**

(54) **MODULAR MULTI-LEVEL ELECTRIC POWER CONVERTER**

(57) In order to prevent damage to a power semiconductor in a modular multi-level power converter, switching is performed to a diode side when the current of a unit converter exceeds a threshold, and switching is stopped until the current returns to below the threshold. In order to suppress a voltage rise of a unit converter that occurs when switching is stopped, there is provided a modular multi-level power converter suitable for continuous operation in the event of system fault propagation by comparing a capacitor average voltage value with a set value to adjust a command value of an active power component of an alternating current, controlling capacitor imbalance between a positive-side and a negative-side with a circulating current, and energizing a capacitor imbalance control output between three phases to a voltage command of a current control output to perform feedforward control.

**EP 4 654 456 A1**

# FIG.2

EP 4 654 456 A1

**Description**

Field

The present invention relates to a modular multi-level power converter (hereinafter, referred to as an "MMC converter" in the present invention). In particular, the present invention relates to a modular multi-level power converter suitable for forming a frequency conversion device by connecting the DC sides of two MMC converters back-to-back.

Background

The circuit of an MMC converter consists of a unit converter that generates a required voltage by controlling the modulation factor of a PWM converter that uses an energy storage element with voltage source characteristics, such as a capacitor, as the voltage source. The capacitor voltage of the unit converter fluctuates due to charging and discharging at a cycle determined by the AC frequency. Six two-terminal arms in each of which K unit converters are connected in series are provided, three of them are used as positive-side arms, the negative-side terminals thereof are connected to the respective phase terminals of an AC power supply, and star-connected positive-side terminals are connected to the positive-side terminals of a DC power supply. The remaining three arms are used as negative-side arms, the positive-side terminals thereof are connected to the respective phase terminals of the AC power supply, and the star-connected negative-side terminals are connected to the negative-side terminals of the DC power supply.

A characteristic of the MMC converter is that capacitor voltage control is required to maintain the 6×K capacitor voltages provided in the unit converters within a predetermined range.

Functions necessary for the capacitor voltage control can be divided into three functions: a function of maintaining the balance of the K capacitor voltages by mutually adjusting the modulation factors of the K PWM converters provided for the respective unit converters within the same arm (hereinafter, referred to as "intra-arm balance control" in the present invention); a function of maintaining the balance of the 2×K capacitor average voltages constituting each phase positive-side arm and negative-side arm in each phase (hereinafter, referred to as "inter-leg balance control" in the present invention); and a function of maintaining the balance of the difference voltages between the K capacitor average voltages of the positive-side arm and the K capacitor average voltages of the negative-side arm (hereinafter, referred to as "positive-and-negative balance control" in the present invention).

Patent Literature 1 discloses a basic circuit configuration in which an inductive element, such as a reactor, is provided between a first terminal and an AC terminal of a positive-side arm and between a second terminal and an AC terminal of a negative-side arm, in order to suppress a through current from a negative-side arm to a positive-side arm of an MMC converter.

Patent Literature 2 discloses a basic circuit configuration including a three-phase five-leg reactor in which a winding of each phase positive-side arm and a winding of each phase negative-side arm are magnetically coupled by first to third iron-core legs and through currents for respective phases are magnetically coupled by fourth and fifth iron-core legs to reduce the size, in order to suppress a through current from a negative-side arm to a positive-side arm of an MMC converter.

Patent Literature 3 discloses a basic hierarchical configuration of a control system including a PWM modulator and a converter current control provided for each unit converter of an MMC converter. In addition, a method of adding a circulating current command of a second harmonic to a current command of a fundamental wave is disclosed.

Patent Literature 4 discloses a method of achieving a variable speed generator electric motor device by connecting an AC side of one of two MMC converters having the DC sides connected back-to-back to an AC rotating electric machine. In addition, a method of damper starting is disclosed for starting a synchronous machine in an MMC converter which has the disadvantage that in principle direct currents cannot be output.

Patent Literature 5 discloses a configuration and a functional block diagram of a host control device in two MMC converters having the DC sides connected back-to-back.

Patent Literatures 6 and 7 specifically and systematically disclose a control configuration suitable for maintaining inter-leg and positive-and-negative balance of the capacitor voltages of unit converters that form a MMC converter.

Patent Literature 8 discloses a method for achieving both system efficiency and cost reduction by reducing a MMC converter rated capacity, when a variable speed device of a synchronous generator motor is formed by two MMC converters having the DC sides connected back-to-back, by limiting a variable speed operation via the MMC converters to a low load and selecting a constant speed operation directly connected to an AC system near a rated load to be switchable during operation.

Citation List

Patent Literature

Patent Literature 1: JP 5189105 B
Patent Literature 2: WO 2022/044091 A
Patent Literature 3: JP 5197623 B
Patent Literature 4: JP 6243083 B
Patent Literature 5: WO 2022/059211 A
Patent Literature 6: JP 6618823 B
Patent Literature 7: PCT/JP2023/000883
Patent Literature 8: JP 6995991 B

Summary of Invention

Problem to be solved by the Invention

MMC converters are classified as voltage power converters using self-extinguishing power semiconductor elements. In a case of a voltage power converter, it is more difficult to economically ensure overcurrent withstand capability compared to other-excited power converters, as well as power equipment, such as rotating electrical machinery and transformers.

In general, while the withstand capacity of power semiconductors without a self-extinguishing function, such as thyristors and diodes that form other-excited power converters is limited by the junction temperature in the practical range, in a case of self-extinguishing power semiconductor elements and antiparallel high-speed diodes that form voltage type power converters, the voltage/current trajectory during switching needs to be kept within the safety range determined by the power semiconductor.

In order to keep the voltage/current trajectory within the safe range, it is desirable to have a current control function that suppresses overcurrent in the event of disturbance propagation such as a system side ground fault. At least, it is important to limit the current value at the start of turn-off of the self-extinguishing power semiconductor element and the antiparallel high-speed diode.

In practice, the current control is achieved while sharing the capacitor voltage control function and the function of adjusting six arm voltages, and thus, cooperation between the current control and the capacitor voltage control is required.

MMC converters have an advantage of reduced losses compared to conventional three-level converters and the like, but a disadvantage of increased device size. In particular, this is a problem when applying them to applications with strict installation area and volume restrictions, such as pumped storage power plants and offshore wind farms, which are often installed underground.

A cause of the increase in size of an MMC converter is capacitors used as energy storage elements of a unit converter. In a case of a conventional MMC converter, capacitors often occupy a majority of the arm volume. Although capacitors can be downsized by reducing the stored energy of the capacitors, the bottleneck is the increase in the capacitor voltage pulsation rate r due to charging and discharging at a cycle determined by the AC frequency.

In order to compare the capacitor capacity per output capacitance with a conventional power converter, a dimensionless capacitor capacity coefficient Kc is defined. The capacitor capacity coefficient Kc is a value obtained by dividing the energy when all the capacitors are charged at the rated voltage by the rated capacity P0 of the MMC converter to obtain the time constant [sec] and then by unitizing the time constant into one cycle of the AC frequency F0.

To compare with a conventional three-level converter, the three-level converter needs to be compared with half the DC capacitance, because two power converters having the DC sides connected back-to-back share the DC capacitor.

Here, assuming that the capacitor capacity of a unit converter is represented by C and the rated voltage of the capacitor is represented by V0, the capacitor capacity coefficient Kc is expressed by Formula (1). Here, the number of unit converters connected in series in the arm is represented by K.

Formula 1:

$$Kc = \frac{6 \times K \times \left(\frac{1}{2} C \times V0^2\right)}{P0} \times F0 \qquad \cdots (1)$$

In a case of the conventional three-level converter, the capacitor capacity coefficient Kc can be suppressed to 1 or less even if the capacitor capacity is increased to ensure operation continuation performance during a system fault for application to commercial power generation facilities.

In a case of the MMC converter, it has been found that when the capacitor capacity coefficient Kc is 3 or less, the voltage pulsation rate r increases rapidly above 0.1, while the effect of reducing the voltage pulsation rate r fades rapidly even when the capacitor capacity coefficient Kc is 3 or more.

Here, the relationship between the voltage pulsation rate r, the maximum value Vc_max of the capacitor voltage, and the minimum value Vc_min is expressed by Formula (2).

Formula 2:

$$r = \frac{Vc\_\max - Vc\_\min}{Vc\_\max + Vc\_\min} \qquad \cdots (2)$$

When comparing the dimensions and the volume of the MMC converter with those of the conventional three-level converter, the capacitor voltage pulsation ratio r of the MMC converter needs to be allowed to be 10% or more to bring the dimensions and volume of the MMC converter closer to those of the conventional three-level converter, even when an accessory such as a harmonic filter, which is unnecessary for the MMC converter, is included. Alternatively, the capacitor capacity coefficient Kc needs to be set smaller than 3.

In particular, when one of the two MMC converters having the DC sides connected back-to-back is connected to an AC rotating electric machine and applied to a pumped-storage generator motor or a wind power generator, these facilities are often located at the trailing end of the power system. It is not necessarily appropriate to apply MMC converters, which have traditionally been implicitly assumed to be directly connected to the loop power grid that constitutes a bulk power system, to the above facilities.

In a case of the trailing end connection of the power system, disturbance due to ground fault propagation on the AC system side or the like is significant. Especially in a period from removal of the ground fault phase after a one-phase ground fault during one-circuit power transmission to reclosing, it is necessary to continue operation in the open-phase state (two-phase operation). In addition, an operation continuation function in the event of a close-end symmetric fault (three-phase ground fault) during two-circuit power transmission has also been a major premise of access to the power system in a conventional power generation facility for commercial use using a conventional synchronous machine.

In a case of the MMC converter, especially when the capacitor capacity is suppressed to reduce the size and weight, the balance of the capacitor voltages is easily disturbed in the event of system fault propagation, and thus the overcurrent peak value tends to further increase. In a case of the conventional MMC converter, overcurrent and capacitor voltage fluctuations caused by a close-end fault often result in specifications that do not allow for continuous operation.

The present invention is suitable for solving a problem such as continuous operation in the event of system fault propagation while reducing the size and weight of an MMC converter by adjusting "capacitor capacity coefficient Kc to 3 or less" or "capacitor voltage pulsation rate r to 0.1 or more".

An object of the present invention is to solve the above problem and to achieve both low loss, which is an advantage of an MMC converter, and device downsizing as well as improvement of operation continuation performance in the event of system fault propagation, which are disadvantages.

Means to Solve the Problem

In order to solve the above problem and achieve the object, a gate command to a self-extinguishing element is fixed such that a current flows to an antiparallel diode side when the current of a unit converter exceeds a threshold, and the control returns to PWM control when the current falls below the threshold. There is provided an MMC converter suitable for continuing an operation in the event of system fault propagation by suppressing the capacitor rise in a unit converter that occurs in a gate command period by active power control of an alternating current.

Hereinafter, means for achieving these functions will be described.

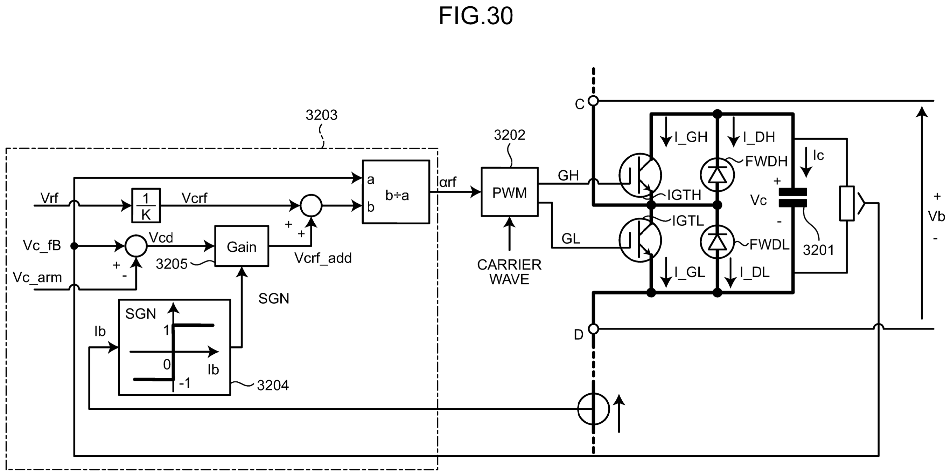

FIG. 30 illustrates a power circuit and a control device of a unit converter. K of these unit converters are connected in series to constitute two-terminal arms, the positive-side terminals of three arms are star-connected to a positive-side terminal of a DC power supply, the negative-side terminals of another three arms are star-connected to a negative-side terminal of the DC power supply, and the remaining terminals of the respective arms are connected to the respective phase AC terminals to form a modular multi-level power converter.

The power circuit of the unit converter is called a half-bridge power converter. An upper self-extinguishing element IGTH and an antiparallel diode FWDH are connected to a positive electrode side of a capacitor 3201, a lower self-extinguishing element IGTL and an antiparallel diode FWDL are connected to a negative electrode side, a positive-side terminal (C) is drawn from between the upper and lower self-extinguishing elements, and a negative-side terminal (D) is drawn from the negative electrode of the capacitor 3201.

The control device of the unit converter is divided into a PWM modulator 3202 and a modulation command calculation circuit 3203.

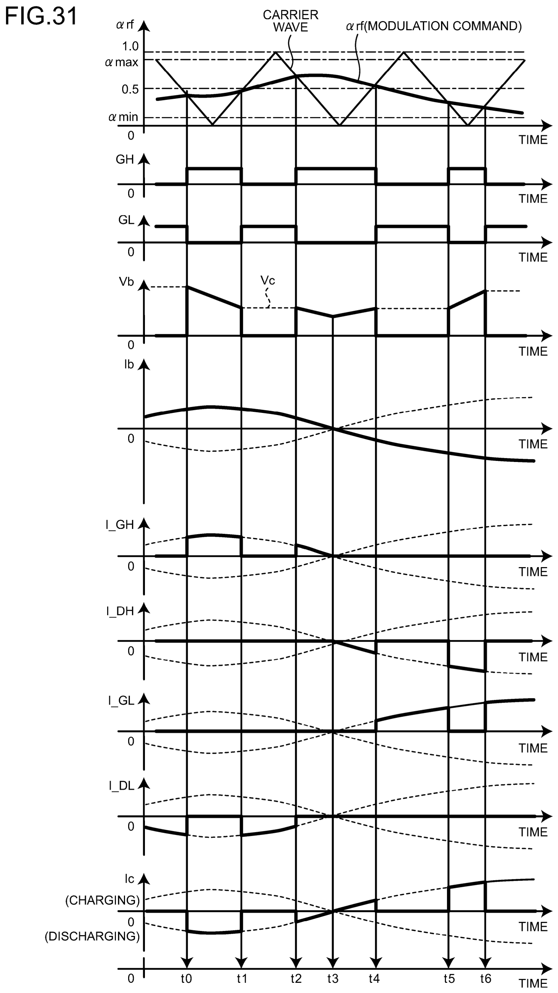

FIG. 31 illustrates steady-state waveforms inside the MMC converter and of the AC power supply and the DC power supply that are connected to the MMC converter.

Three stages from the top in FIG. 31 are waveform diagrams showing the operation of the PWM modulator 3202. A modulation factor command ($\alpha$rf) from a modulation command calculation circuit 3203 is compared with the magnitude of the carrier wave, and a gate (GH) to the upper self-extinguishing element IGTH is energized when the former is larger, and a gate (GL) to the lower self-extinguishing element IGTL is energized when the former is smaller. Since the upper and lower self-extinguishing elements cause a capacitor short-circuit fault due to simultaneous energization, it is necessary to prevent simultaneous energization of the gate (GH) and the gate (GL).

In FIG. 31, in a period up to time t3, a unit converter current (Ib) flows from the negative-side terminal (D) to the positive-side terminal (C). In this period, when the gate (GH) is energized (from time t0 to t1, from t2 to t3), the current flows through the upper self-extinguishing element IGTH, and a converter output voltage (Vb) becomes a capacitor voltage (Vc). Since the unit converter current (Ib) becomes a discharge current (Ic<0) of the capacitor 3201, the capacitor voltage (Vc) decreases. In this period, when the gate (GL) is energized (until time t0, from t1 to t2), the current flows through the lower diode FWDL, and the converter output voltage (Vb) is negative due to the on-voltage of the diode, but it can be considered zero for circuit operation. Since the capacitor 3201 is opened (Ic=0), the capacitor voltage (Vc) becomes constant.

In FIG. 31, in a period after time t3, the unit converter current (Ib) flows from the positive-side terminal (C) to the negative-side terminal (D). In this period, when the gate (GL) is energized (from time t4 to t5, after t6), the current flows through the lower self-extinguishing element IGTL, and the converter output voltage (Vb) is positive due to the on-voltage of the self-extinguishing element, but it can be considered zero for circuit operation. Since the capacitor 3201 is opened (Ic=0), the capacitor voltage (Vc) becomes constant. In this period, when the gate (GH) is energized (from time t3 to t4, from t5 to t6), the current flows through the upper diode FWDH, and the converter output voltage (Vb) becomes the capacitor voltage (Vc). Since the unit converter current (Ib) becomes a charging current (Ic>0) of the capacitor, the capacitor voltage (Vc) increases.

The modulation command calculation circuit 3203 outputs a modulation command ($\alpha$rf) to the PWM modulator 3202. The modulation command ($\alpha$rf) is a time ratio of a gate (GH) energizing period. The relationship among the converter output voltage (Vb), the capacitor voltage (Vc), and the modulation command ($\alpha$rf) can be approximated by (Vb=$\alpha$rf$\times$Vc). Increasing the modulation command ($\alpha$rf) can increase the converter output voltage (Vb).

On the other hand, if the modulation command ($\alpha$rf) is increased, the capacitor voltage (Vc) decreases because the discharge period of the capacitor 3201 increases when the unit converter current (Ib) is positive, and the capacitor voltage (Vc) increases because the charge period of the capacitor 3201 increases when the unit converter current (Ib) is negative.

From the characteristics of the power circuit described above, there are two functions required of the modulation command calculation circuit 3203. The first one is a function of causing a converter output voltage (Vb) to follow a voltage command (Vcrf) obtained by dividing a voltage command (Vrf) of an arm constituted by K unit converters connected in series into K equal parts. The second one is a function of making the deviation (Vcd) of K capacitor average voltages (Vc_arm) in the same arm as a capacitor voltage measurement value (Vc_fB) zero in order to maintain the balance of the K capacitor voltages in the arm.

In order to make the deviation (Vcd) zero, a current code detector 3204 checks the code of the unit converter current (Ib), and when (Ib>0), Gain of a gain 3205 is set to be positive, and when the deviation (Vcd) is positive, a modulation command correction (Vcrf_add) is set to be positive to increase the modulation command ($\alpha$rf) to reduce the converter output voltage (Vb). When (Ib<0), Gain of the gain 3205 is set to be negative, and when the deviation (Vcd) is positive, the modulation command correction (Vcrf_add) is set to be negative to reduce the modulation command ($\alpha$rf) to reduce the converter output voltage (Vb).

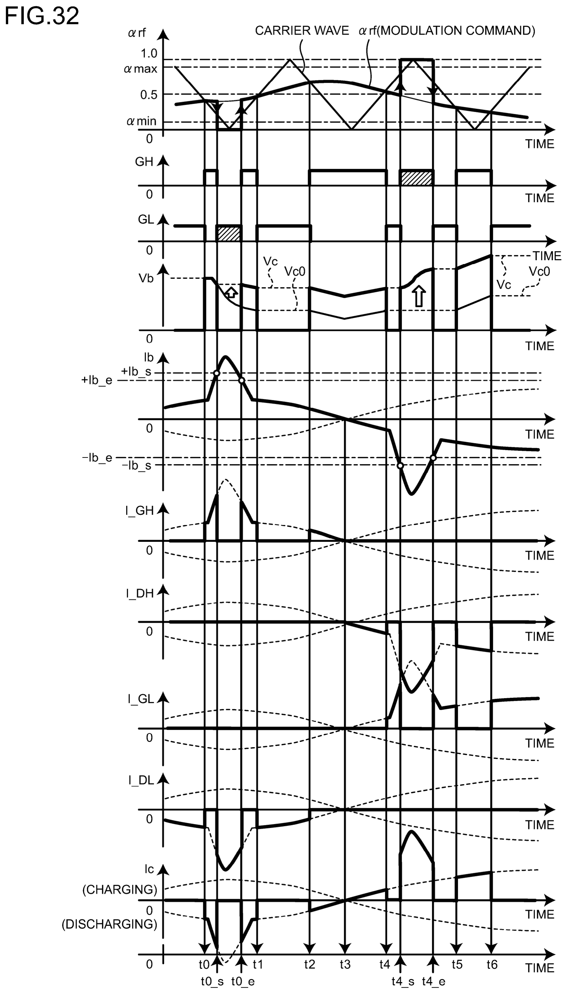

Hereinafter, with reference to FIG. 32, means for continuing operation without damaging the device even if the transient current of the unit converter current (Ib) exceeds the allowable switching current values of the self-extinguishing elements (IGTH, IGTL) and the antiparallel diodes (FWDH, FWDL) due to propagation of a system fault on the AC power supply side, for example, is described.

The gate (GL) is energized regardless of the modulation command ($\alpha$rf) in a period (from time t0_s to t0_e) in which the unit converter current (Ib) is positive and exceeds set values (+Ib_s, +Ib_e), and the gate (GH) is energized regardless of the modulation command ($\alpha$rf) in a period (from time t4_s to t4_e) in which the unit converter current (Ib) is negative and the absolute value exceeds set values (-Ib_s, -Ib_e). As a result, switching at a current value exceeding the setting can be avoided. In addition, the current exceeding the setting concentrates on the diodes. In general, a diode has a higher junction temperature tolerance than a self-extinguishing element, such as an IGBT or an IGCT. Therefore, the device damage risk can be reduced and the operation can be continued.

On the other hand, in the above period (from time t0_s to t0_e), the capacitor 3201 changes from the discharge mode to the open mode, and in the period (from time t4_s to t4_e), the capacitor 3201 changes from the open mode to the charge mode. As a result, as indicated by the capacitor voltage waveforms Vc0 and Vc in FIG. 32, the capacitor voltage changes in the rising direction in any period.

Theoretically, it is also conceivable to energize the gate (GH) or (GL) without regardless of the modulation command (αrf) such that the capacitor 3201 changes from the charge mode to the open mode or such that the capacitor 3201 changes from the open mode to the discharge mode when the unit converter current (Ib) exceeds the set values. However, it has been found that, at least when an MMC converter is configured with the capacitor capacity (Kc) assumed in the present invention in pursuit of economic rationality, the capacitor voltage rapidly decreases, and the modulation command (αrf) to the unit converter remains at the limit value and becomes uncontrollable, and operation cannot be continued.

Therefore, when the above means is employed, it is necessary to control the average voltage of the capacitor 3201 at the highest speed with the highest priority. For this purpose, it is extremely effective that a DC component command of the AC current control is calculated and output by comparing the average voltage of all the capacitors with the voltage set value, and the DC component command is directly input to the AC current control device without being energized by other elements.

It has been found that the above configuration is suitable for solving the problem.

With the above configuration, when the unit converter current exceeds the threshold, the switching is performed to the diode side, and the switching is stopped until the unit converter current falls below the threshold, thereby preventing damage to the self-extinguishing elements and the diodes in the event of system fault propagation. This has an effect of achieving operation continuation in the event of system fault propagation.

Effects of the Invention

An MMC converter according to the present invention can achieve both device downsizing and ensuring operation continuation performance in the event of system fault propagation.

Brief Description of Drawings

FIG. 1 is a diagram illustrating a configuration of an MMC converter according to the present invention.
FIG. 2 is a diagram illustrating a configuration of a leg circuit according to a first embodiment of the present invention.
FIG. 3 is a diagram illustrating a configuration of a unit converter according to the present invention.
FIG. 4 is a diagram illustrating a configuration of a power converter control device according to the first embodiment of the present invention.
FIG. 5 is a diagram illustrating a configuration of a DC current control device according to the first embodiment of the present invention.
FIG. 6 is a diagram illustrating a configuration of an AC current control device according to the present invention.
FIG. 7 is a diagram illustrating a configuration of a circulating current control device according to the first embodiment of the present invention.
FIG. 8 is a diagram illustrating a configuration of a unit converter control device according to the first embodiment of the present invention.
FIG. 9 is a diagram illustrating a configuration of a power converter control device according to a second embodiment of the present invention.
FIG. 10 is a diagram illustrating a configuration of a DC current control device according to the second embodiment of the present invention.
FIG. 11 is a diagram illustrating a configuration of a positive-and-negative balance control device according to the second embodiment of the present invention.
FIG. 12 is a diagram illustrating a configuration of a circulating current control device according to the second embodiment of the present invention.
FIG. 13 is a diagram for explaining three-line ground fault accident conditions and waveform measurement points in a two-circuit power transmission system during operation of the MMC converter of the present invention.
FIG. 14 is a diagram illustrating opening and closing conditions of each unit at an accident occurrence time t1 and a circuit breaker operation time t2 in the event of a ground fault illustrated in FIG. 13.
FIG. 15 is a diagram illustrating AC voltage and current waveforms and capacitor average voltages of unit converters of six power arm circuits forming the MMC converter in the event of a system fault in FIGS. 13 and 14 while a current suppression function during switching of the present invention is excluded in the MMC converter according to the second embodiment of the present invention.
FIG. 16 is a diagram illustrating the maximum capacitor values and the minimum capacitor values of the unit converters of the six power arm circuits forming the MMC converter in the event of the system fault in FIGS. 13 and 14 while the current suppression function during switching of the present invention is excluded in the MMC converter according to the second embodiment of the present invention.

FIG. 17 is a diagram illustrating AC voltage and current waveforms and capacitor average voltages of the unit converters of the six power arm circuits forming the MMC converter in the event of the system fault in FIGS. 13 and 14 while the current suppression function during switching of the present invention is operated in the MMC converter according to the second embodiment of the present invention.

FIG. 18 is a diagram illustrating the maximum capacitor values and the minimum capacitor values of the unit converters of the six power arm circuits forming the MMC converter in the event of the system fault in FIGS. 13 and 14 while the current suppression function during switching of the present invention is operated in the MMC converter according to the second embodiment of the present invention.

FIG. 19 is a diagram illustrating, for each of the six power arm circuits forming the MMC converter, the maximum value of $2 \times K$ self-extinguishing element currents constituting each arm on the vertical axis and the switching current setting value of the present invention on the horizontal axis in the MMC converter according to the second embodiment of the present invention.

FIG. 20 is a diagram illustrating, for each of the 66 power arm circuits forming the MMC converter, the maximum value of $2 \times K$ antiparallel diode currents constituting each arm on the vertical axis and the switching current setting value of the present invention on the horizontal axis in the MMC converter according to the second embodiment of the present invention.

FIG. 21 is a diagram illustrating, for each of the six power arm circuits forming the MMC converter, the maximum value of K capacitor voltages constituting each arm on the vertical axis and the switching current setting value of the present invention on the horizontal axis in the MMC converter according to the second embodiment of the present invention.

FIG. 22 is a diagram illustrating, for each of the six power arm circuits forming the MMC converter, the maximum value of instantaneous voltage imbalance values (maximum value-minimum value) between K capacitor voltages constituting each arm on the vertical axis and the switching current setting value of the present invention on the horizontal axis in the MMC converter according to the second embodiment of the present invention.

FIG. 23 is a diagram illustrating a configuration of a power converter control device according to a third embodiment of the present invention.

FIG. 24 is a diagram illustrating a configuration of a positive-and-negative balance control device according to the third embodiment of the present invention.

FIG. 25 is a diagram illustrating a configuration of a circulating current control device according to the third embodiment of the present invention.

FIG. 26 is a diagram illustrating AC voltage and current waveforms and capacitor average voltages of unit converters of six power arm circuits forming the MMC converter in the event of the system fault in FIGS. 13 and 14 while a current suppression function during switching of the present invention is operated in the MMC converter according to the third embodiment of the present invention.

FIG. 27 is a diagram illustrating the maximum capacitor values and the minimum capacitor values of the unit converters of the six power arm circuits forming the MMC converter in the event of the system fault in FIGS. 13 and 14 while the current suppression function during switching of the present invention is operated in the MMC converter according to the third embodiment of the present invention.

FIG. 28 is a diagram illustrating a configuration of a leg circuit according to a fourth embodiment of the present invention.

FIG. 29A is a first diagram illustrating a configuration of an inductive element according to the fourth embodiment of the present invention.

FIG. 29B is a second diagram illustrating a configuration of the inductive element according to the fourth embodiment of the present invention.

FIG. 30 is a diagram illustrating a configuration of a unit converter for explaining means of the MMC converter of the present invention.

FIG. 31 is a diagram illustrating operation waveforms of a conventional unit converter for explaining means of the MMC converter of the present invention.

FIG. 32 is a diagram illustrating operation waveforms of a unit converter of the present invention for explaining means of the MMC converter of the present invention.

Description of Embodiments

Hereinafter, embodiments of an MMC converter according to the present invention will be described in detail with reference to the drawings. Note that the present invention is not limited by the embodiments.

First Embodiment

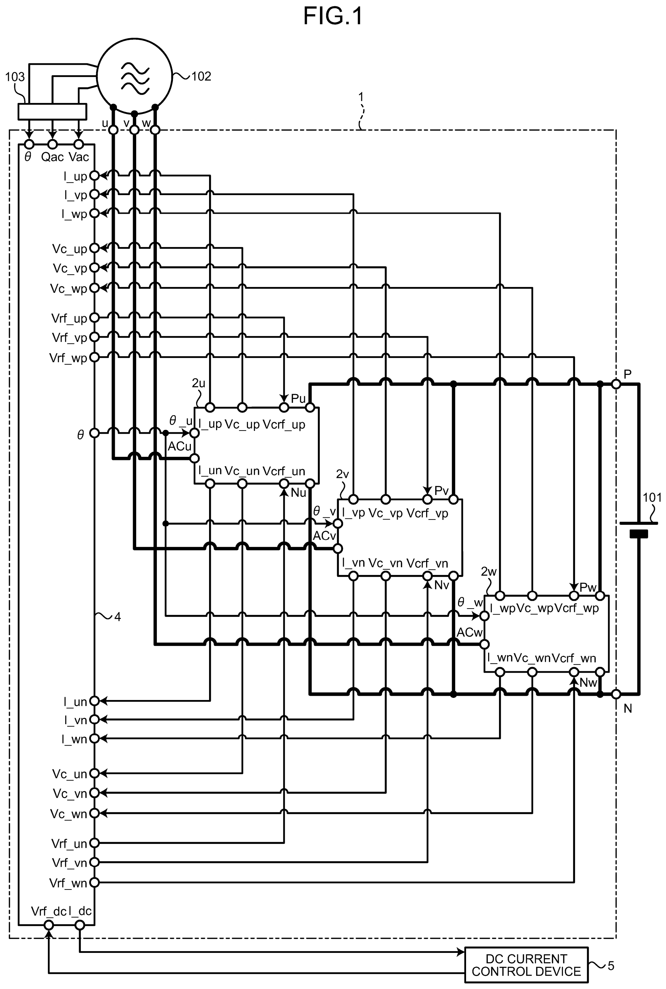

FIG. 1 is a diagram illustrating a configuration of an MMC converter of a first embodiment according to the present invention.

Reference sign 1 denotes an MMC converter that is connected between a positive-side terminal (P) and a negative-side terminal (N) of a DC power supply 101 and three terminals (u, v, w) of a three-phase AC power supply 102. The MMC converter 1 includes three leg circuits 2u, 2v, and 2w.

Positive-side terminals (Pu, Pv, Pw) of the three leg circuits 2u, 2v, 2w are star-connected to connect them to the positive-side terminal (P) of the DC power supply 101, negative-side terminals (Nu, Nv, Nw) are star-connected to connect them to the negative-side terminal (N) of the DC power supply 101, and intermediate terminals (ACu, ACv, ACw) are connected to the three terminals (u, v, w) of the AC power supply 102. Reference sign 103 denotes an AC sensor that outputs a voltage (Vac), reactive power (Qac), and a reference phase (θ) of the AC power supply 102.

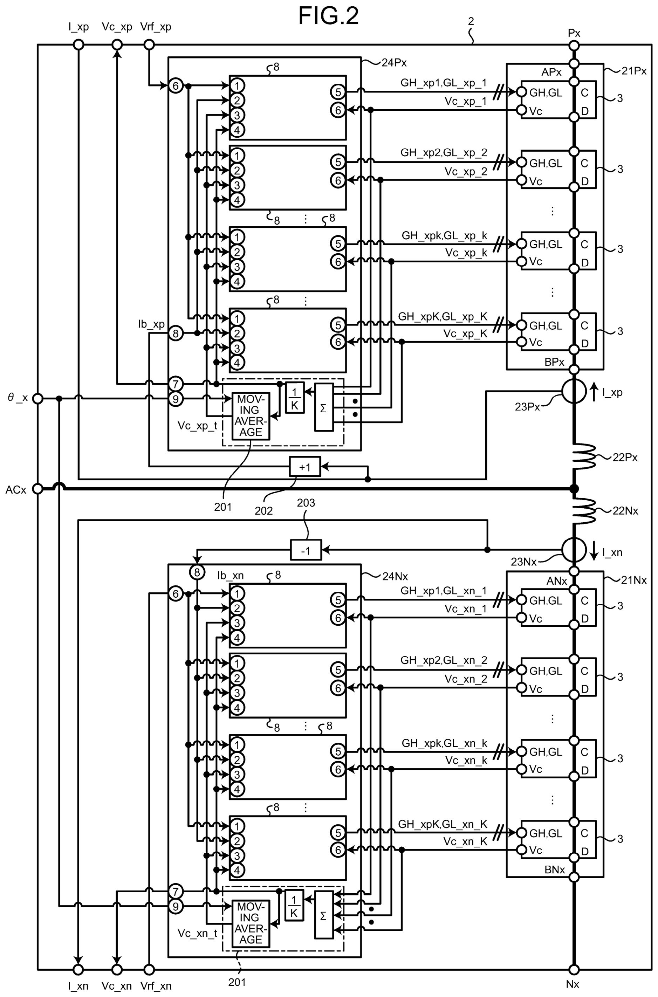

FIG. 2 is a diagram illustrating a configuration of a leg circuit 2 (2u, 2v, 2w) according to the first embodiment of the present invention.

Hereinafter, for the sake of simplicity, "x" represents the three phases (u, v, w) of the AC power supply 102.

The leg circuit 2 includes a two-terminal positive-side arm power circuit 21Px, a two-terminal negative-side arm power circuit 21Nx, a positive-side inductive element 22Px, such as a reactor, a negative-side inductive element 22Nx, and two current transformers (23Px, 23Nx).

A positive-side terminal (APx) of the positive-side arm power circuit 21Px is connected to the positive-side terminal (Px) of the leg circuit 2, a negative-side terminal (BPx) thereof is connected to a first terminal of the positive-side inductive element 22Px, and a second terminal thereof is connected in parallel to the intermediate terminal (ACx) of the leg circuit 2 and a first terminal of the negative-side inductive element 22Nx.

A second terminal of the negative-side inductive element 22Nx is connected to a positive-side terminal (ANx) of the negative-side arm power circuit 21Nx, and a negative-side terminal (BNx) thereof is connected to the negative-side terminal (Nx) of the leg circuit 2.

The positive-side current transformer 23Px detects arm currents (I_up, I_vp, I_wp) having a positive sign in a direction from the negative-side terminal (BPx) to the positive-side terminal (APx) of the positive-side arm power circuit 21Px, and distributes and outputs them to a positive-side arm control device 24Px and a power converter control device 4.

The negative-side current transformer 23Nx detects arm currents (I_un, I_vn, I_wn) having a positive sign in a direction from the positive-side terminal (ANx) to the negative-side terminal (BNx) of the negative-side arm power circuit 21Nx, and distributes and outputs them to a negative-side arm control device 24Nx and the power converter control device 4.

The positive-side arm power circuit 21Px and the negative-side arm power circuit 21Nx connect K (K is a natural number of 2 or more) two-terminal unit converters 3 in series between the respective positive-side terminals (APx, ANx) and negative-side terminals (BPx, BNx).

Reference sign 24 denotes an arm control device in which the positive-side arm control device 24Px is connected to the positive-side arm power circuit 21Px, and the negative-side arm control device 24Nx is connected to the negative-side arm power circuit 21Nx.

The arm control device 24 includes K unit converter control devices 8 and an average value calculator 201 that outputs an average value of K input signals.

Hereinafter, for the sake of simplicity, "y" represents suffixes (P, N) of two poles of the DC power supply 101. "k" represents suffixes (1, 2, ..., K) of the K unit converters.

The positive-side arm control device 24Px receives an arm voltage command (Vrf_xp) from the power converter control device 4, and branches and receives a reference phase (θ_x). The positive-side arm control device 24Px further receives an arm current (I_xp) from the positive-side current transformer 23Px as a unit converter current (Ib_xp=I_xp) via a gain 202.

The negative-side arm control device 24Nx receives an arm voltage command (Vrf_xn) from the power converter control device 4, and branches and receives the reference phase (θ_x). The negative-side arm control device 24Nx further receives an arm current (I_xn) from the negative-side current transformer 23Nx as a sign-inverted unit converter current (Ib_xn=-I_xn) via a gain 203.

The arm control device 24 distributes and outputs the unit converter current (Ib) and an arm capacitor average voltage (Vc_xy) from the average value calculator 201 to the unit converter control device 8 provided for each of the K unit converters 3. The arm control device 24 further distributes and outputs an arm capacitor average voltage (Vc_xy_t), which is calculated by moving average at an AC system cycle by receiving the reference phase (θ_x), to the unit converter control device 8.

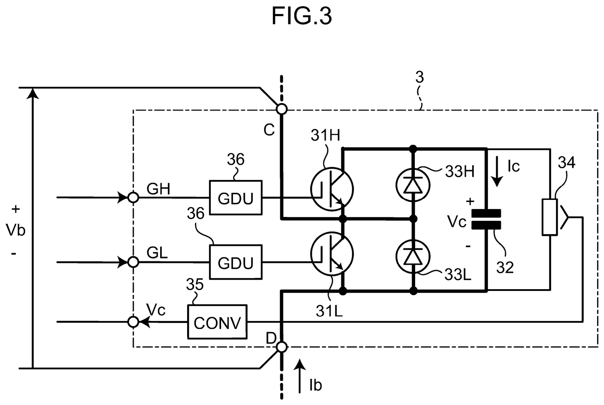

FIG. 3 is a diagram illustrating a configuration of the unit converter 3 according to the present invention.

The unit converter 3 includes a unit converter power circuit having a half-bridge power circuit configuration and a unit converter auxiliary circuit.

In the unit converter power circuit, a positive electrode (a collector of an IGBT or an anode of an IGCT) of an upper self-extinguishing element 31H is connected to a positive electrode of a capacitor 32, and a negative electrode (an emitter of the IGBT or a cathode of the IGCT) of the upper self-extinguishing element 31H is branched and connected to a positive-side terminal (C) of the unit converter 3 and a positive electrode of a lower self-extinguishing element 31L. A negative electrode of the lower self-extinguishing element 31L is branched and connected to a negative electrode of the capacitor 32 and a negative-side terminal (D) of the unit converter 3. An upper diode 33H is connected in antiparallel to the upper self-extinguishing element 31H. A lower diode 33L is connected in antiparallel to the lower self-extinguishing element 31L to form a half-bridge power circuit.

The unit converter auxiliary circuit includes a gate drive device 36, a capacitor voltage detector 34, and a voltage signal converter 35.

The gate drive device 36 receives gate control signals (GH, GL) from the positive-side arm control device 24Px and the negative-side arm control device 24Nx, level-converts the gate control signals, and energizes and outputs a gate pulse to a gate circuit of the upper self-extinguishing element 31H and a gate circuit of the lower self-extinguishing element 31L.

The gate control signals (GH, GL) adjust an on/off period to adjust the terminal voltage (Vb) of the unit converter 3 to a required value by PWM modulation.

The capacitor voltage detector 34 outputs the voltage of the capacitor 32 to the voltage signal converter 35, and the voltage signal converter 35 converts it to a signal level to generate a voltage signal Vc. The unit converter 3 outputs the capacitor voltage signal Vc generated by the voltage signal converter 35 to the positive-side arm control device 24Px and the negative-side arm control device 24Nx as a capacitor voltage signal (Vc_xy_k).

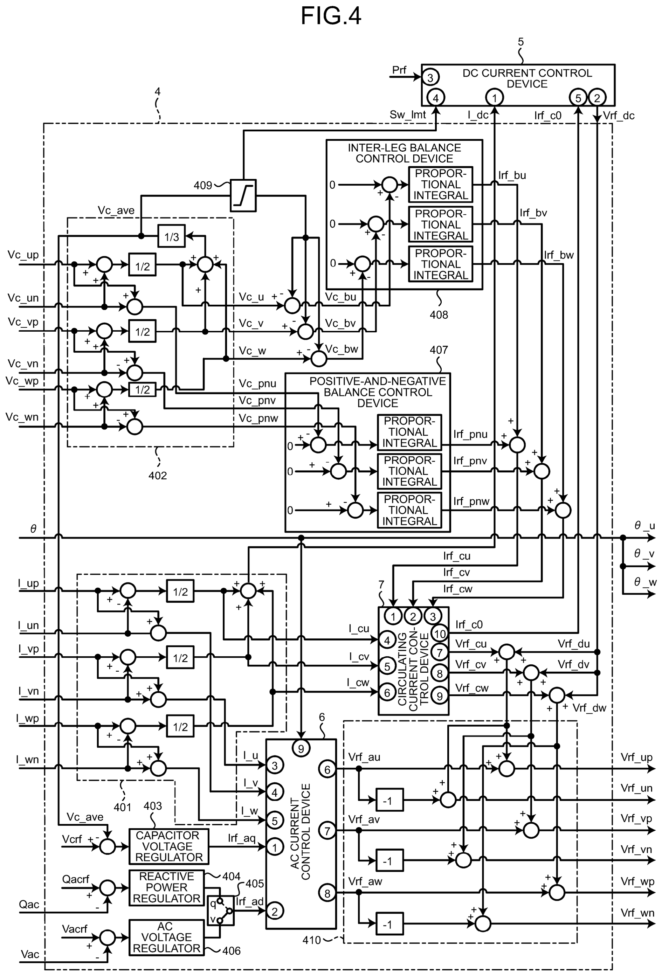

FIG. 4 is a diagram illustrating a configuration of the power converter control device 4 according to the first embodiment of the present invention. FIG. 4 is based on the configuration disclosed in Patent Literature 6.

Reference sign 401 denotes an arm current calculator that receives arm currents (I_up, I_vp, I_wp, I_un, I_vn, I_wn) from the current transformer 23, and calculates and outputs alternating currents (I_u, I_v, I_w) entering the intermediate terminals (ACu, ACv, ACw) of the MMC converter 1 from the AC power supply 102 and through currents (I_cu, I_cv, I_cw) entering the positive-side terminals (Px) from the negative-side terminals (Nx) of the leg circuits (2u, 2v, 2w). The arm current calculator 401 further calculates and outputs a direct current (I_dc) from the positive-side terminal (P) of the MMC converter 1.

The alternating currents (I_u, I_v, I_w) are calculated by Formula (3).
Formula 3:

$$I\_u = I\_up + I\_un$$

$$I\_v = I\_vp + I\_vn \qquad\qquad \cdots (3)$$

$$I\_w = I\_wp + I\_wn$$

The through currents (I_cu, I_cv, I_cw) are calculated by Formula (4).
Formula 4:

$$I\_cu = \frac{1}{2}(I\_up - I\_un)$$

$$I\_cv = \frac{1}{2}(I\_vp - I\_vn) \qquad\qquad \cdots (4)$$

$$I\_cw = \frac{1}{2}(I\_wp - I\_wn)$$

The direct current (I_dc) is calculated by Formula (5).
Formula 5:

$$I\_dc = I\_cu + I\_cv + I\_cw \qquad\qquad \cdots (5)$$

Reference sign 402 denotes a capacitor voltage calculator that receives capacitor arm average voltages (Vc_up, Vc_vp, Vc_wp, Vc_un, Vc_vn, Vc_wn) from the arm control device 24, and outputs capacitor leg average voltages (Vc_u, Vc_v, Vc_w) and capacitor positive-and-negative difference voltages (Vc_pnu, Vc_pnv, Vc_pnw) of the leg circuits 2. The capacitor voltage calculator 402 further calculates and outputs a total capacitor average voltage (Vc_ave).

The capacitor leg average voltages (Vc_u, Vc_v, Vc_w) are calculated by Formula (6).

Formula 6:

$$Vc\_u = \frac{1}{2}(Vc\_up + Vc\_un)$$

$$Vc\_v = \frac{1}{2}(Vc\_vp + Vc\_vn) \qquad \cdots (6)$$

$$Vc\_w = \frac{1}{2}(Vc\_wp + Vc\_wn)$$

The capacitor positive-and-negative difference voltages (Vc_pnu, Vc_pnv, Vc_pnw) are calculated by Formula (7).

Formula 7:

$$Vc\_pnu = Vc\_up - Vc\_un$$

$$Vc\_pnv = Vc\_vp - Vc\_vn \qquad \cdots (7)$$

$$Vc\_pnw = Vc\_wp - Vc\_wn$$

The total capacitor average voltage (Vc_ave) is calculated by Formula (8).

Formula 8:

$$Vc\_ave = \frac{1}{3}(Vc\_u + Vc\_v + Vc\_w) \qquad \cdots (8)$$

Reference sign 6 denotes an AC current control device that receives alternating currents (I_u, I_v, I_w) from the arm current calculator 401, a reference phase θ of the AC power supply 102, and two-phase current commands (Irf_aq, Irf_ad), and outputs three-phase arm voltage command AC components (Vrf_au, Vrf_av, Vrf_aw).

Reference sign 403 denotes a capacitor voltage regulator that receives and compares the total capacitor average voltage (Vc_ave) from the capacitor voltage calculator 402 with a command value (Vcrf), and outputs an active power component (Irf_aq) of the AC current command to the AC current control device 6.

Reference sign 404 denotes a reactive power regulator that receives and compares the reactive power (Qac) from the AC sensor 103 with a command value (Qacrf), and outputs it to a q-side input of an output switcher 405.

Reference sign 406 denotes an AC voltage regulator that receives and compares the voltage (Vac) from the AC sensor 103 with a command value (Vacrf), and output it to a v-side input of the output switcher 405.

The output switcher 405 selects the input signal from the reactive power regulator 404 connected to the q-side input or the input signal from the AC voltage regulator 406 connected to the v-side input, and outputs it to the AC current control device 6 as a reactive power component (Irf_ad) of the AC current command.

Reference sign 7 denotes a circulating current control device that receives the through currents (I_cu, I_cv, I_cw) from the arm current calculator 401 and three-phase current commands (Irf_cu, Irf_cv, Irf_cw), and outputs three-phase arm voltage command circulating components (Vrf_cu, Vrf_cv, Vrf_cw). The circulating current control device 7 further outputs a zero-phase component (Irf_c0) obtained by performing three-to-three phase conversion of three-phase current commands (Irf_cu, Irf_cv, Irf_cw). Details of the three-to-three phase conversion performed for the three-phase current commands (Irf_cu, Irf_cv, Irf_cw) will be described later.

Reference sign 407 denotes a positive-and-negative balance control device that performs proportional integral calculation such that the positive-and-negative difference voltages (Vc_pnu, Vc_pnv, Vc_pnw) from the capacitor voltage calculator 402 become zero, and outputs three-phase current commands (Irf_pnu, Irf_pnv, Irf_pnw).

Reference sign 408 denotes an inter-leg balance control device that performs proportional integral calculation such that leg voltage deviations (Vc_bu, Vc_bv, Vc_bw), which are the differences between the leg average voltages (Vc_u, Vc_v, Vc_w) from the capacitor voltage calculator 402 and the output of a limiter 409 using the total capacitor average voltage (Vc_ave) as an input, become zero, and outputs three-phase current commands (Irf_bu, Irf_bv, Irf_bw). The limiter 409 outputs a limiter detection signal (Sw_lmt) at level 1 when the total capacitor average voltage (Vc_ave) reaches a limit value.

The current commands (Irf_pnu, Irf_pnv, Irf_pnw) from the positive-and-negative balance control device 407 and the current commands (Irf_bu, Irf_bv, Irf_bw) from the inter-leg balance control device 408 are energized, and circulating current commands (Irf_cu, Irf_cv, Irf_cw) are output to the circulating current control device 7.

The circulating current commands (Irf_cu, Irf_cv, Irf_cw) are calculated by Formula (9).
Formula 9:

$$Irf\_cu = Irf\_pnu + Irf\_bu$$

$$Irf\_cv = Irf\_pnv + Irf\_bv \qquad \cdots (9)$$

$$Irf\_cw = Irf\_pnw + Irf\_bw$$

Reference sign 410 denotes an arm voltage command calculator that energizes, for each phase, the three-phase arm voltage command AC components (Vrf_au, Vrf_av, Vrf_aw) from the AC current control device 6, the three-phase arm voltage command circulating components (Vrf_cu, Vrf_cv, Vrf_cw) from the circulating current control device 7, and three-phase voltage commands (Vrf_du, Vrf_dv, Vrf_dw) obtained by three-branching and outputting a DC voltage command (Vrf_dc) from the DC current control device 5, and outputs arm voltage commands (Vrf_up, Vrf_un, Vrf_vp, Vrf_vn, Vrf_wp, Vrf_wn).

The arm voltage commands (Vrf_up, Vrf_un, Vrf_vp, Vrf_vn, Vrf_wp, Vrf_wn) are calculated by Formula (10).
Formula 10:

$$Vrf\_up = +Vrf\_au + Vrf\_cu + Vrf\_du$$

$$Vrf\_un = -Vrf\_au + Vrf\_cu + Vrf\_du$$

$$Vrf\_vp = +Vrf\_av + Vrf\_cv + Vrf\_dv$$

$$Vrf\_vn = -Vrf\_av + Vrf\_cv + Vrf\_dv \qquad \cdots (10)$$

$$Vrf\_wp = +Vrf\_aw + Vrf\_cw + Vrf\_dw$$

$$Vrf\_wn = -Vrf\_aw + Vrf\_cw + Vrf\_dw$$

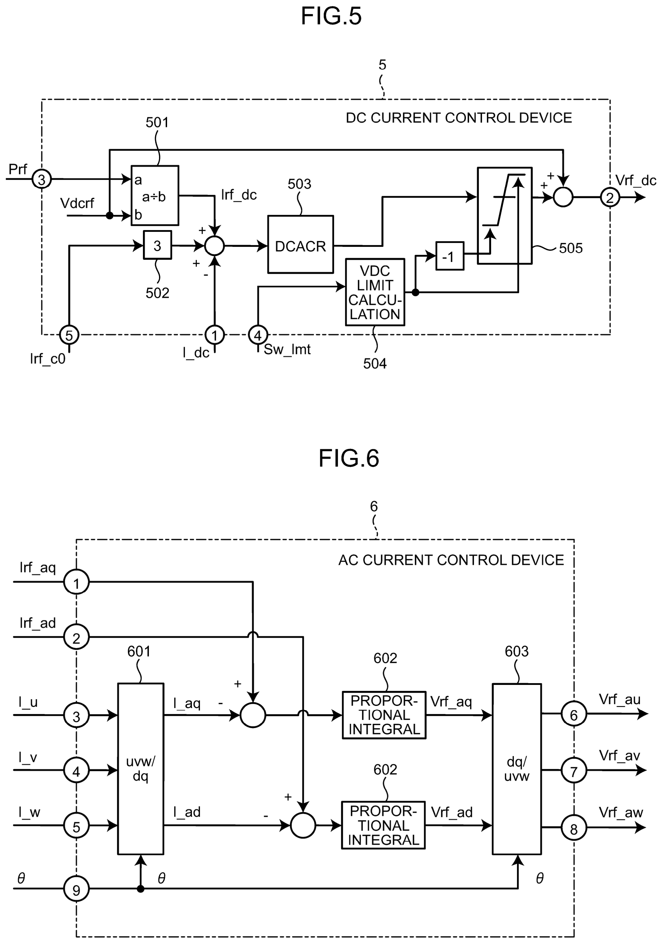

FIG. 5 is a diagram illustrating a configuration of the DC current control device 5 according to the first embodiment of the present invention.

A divider 501 receives an active power command (Prf) and a DC voltage command (Vdcrf) and outputs a DC current command (Irf_dc).

A zero-phase component current command (Irf_c0) from the power converter control device 4 is converted into a DC component command by a gain 502. A DC component command output from a gain 505 is energized to the DC current command (Irf_dc) output from the divider 501, and is compared with the direct current (I_dc) and input to a DC current regulator 503.

The DC current regulator 503 is constituted by a proportional-integral controller or a proportional controller. In a case where the DC current control device 5 of FIG. 5 is used and the DC sides of the two MMC converters are connected back-to-back to form a frequency converter, the DC current regulator 503 of one MMC converter can adopt a proportional-integral controller. However, the other one needs to adopt a proportional controller excluding integral elements.

When the limiter detection signal (Sw_lmt) from the power converter control device 4 is at level 1, a DC voltage limiter 504 instructs a DC voltage command limiter 505 to limit a command value from the DC current regulator 503 and output it. The DC voltage command (Vdcrf) is energized to the command value output from the DC voltage command limiter 505, and is output as an arm voltage command DC component (Vrf_dc).

FIG. 6 is a diagram illustrating a configuration of the AC current control device 6 according to the present invention.

Reference sign 601 denotes a three-to-two phase converter that converts the alternating currents (I_u, I_v, I_w) into two-phase currents (I_aq, I_ad) at the reference phase θ of the AC power supply 102, compares them with the two-phase AC commands (Irf_aq, Irf_ad), and inputs them to a proportional-integral controller 602.

The three-to-two phase converter 601 calculates the relationship between the input and the output in Formula (11).

Formula 11:

$$\begin{bmatrix} I\_aq \\ I\_ad \end{bmatrix} = \frac{2}{3} \begin{bmatrix} \cos(\theta) & \cos\left(\theta - \frac{2}{3}\pi\right) & \cos\left(\theta + \frac{2}{3}\pi\right) \\ \sin(\theta) & \sin\left(\theta - \frac{2}{3}\pi\right) & \sin\left(\theta + \frac{2}{3}\pi\right) \end{bmatrix} \begin{bmatrix} I\_u \\ I\_v \\ I\_w \end{bmatrix} \qquad \cdots (11)$$

Reference sign 603 denotes a two-to-three phase inverter that converts two-phase voltage commands (Vrf_aq, Vrf_ad) from the proportional-integral controller 602 into the three-phase arm voltage command AC components (Vrf_au, Vrf_av, Vrf_aw) and outputs them.

The two-to-three phase inverter 603 calculates the relationship between the input and the output in Formula (12).

Formula 12:

$$\begin{bmatrix} Vrf\_au \\ Vrf\_av \\ Vrf\_aw \end{bmatrix} = \begin{bmatrix} \cos(\theta) & \sin(\theta) \\ \cos\left(\theta - \frac{2}{3}\pi\right) & \sin\left(\theta - \frac{2}{3}\pi\right) \\ \cos\left(\theta + \frac{2}{3}\pi\right) & \sin\left(\theta + \frac{2}{3}\pi\right) \end{bmatrix} \begin{bmatrix} Vrf\_aq \\ Vrf\_ad \end{bmatrix} \qquad \cdots (12)$$

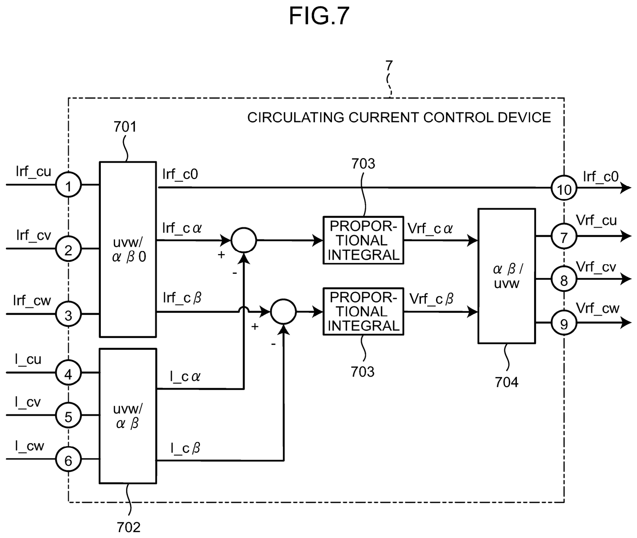

FIG. 7 is a diagram illustrating a configuration of the circulating current control device 7 according to the present invention.

Reference sign 701 denotes a three-to-three phase converter that receives the current commands (Irf_cu, Irf_cv, Irf_cw) and converts them into three-phase current commands (Irf_cα, Irf_cβ, Irf_c0) including the zero phase.

The three-to-three phase converter 701 calculates the relationship between the input and the output in Formula (13).

Formula 13:

$$\begin{bmatrix} Irf\_c\alpha \\ Irf\_c\beta \\ Irf\_c0 \end{bmatrix} = \frac{2}{3} \begin{bmatrix} 1 & -\frac{1}{2} & -\frac{1}{2} \\ 0 & -\frac{\sqrt{3}}{2} & +\frac{\sqrt{3}}{2} \\ +\frac{1}{2} & +\frac{1}{2} & +\frac{1}{2} \end{bmatrix} \begin{bmatrix} Irf\_cu \\ Irf\_cv \\ Irf\_cw \end{bmatrix} \qquad \cdots (13)$$

Reference sign 702 denotes a three-to-two phase converter that converts the through currents (I_cu, I_cv, I_cw) into two-phase circulating currents (I_cα, I_cβ).

The three-to-two phase converter 702 calculates the relationship between the input and the output in Formula (14).

Formula 14:

$$\begin{bmatrix} I\_c\alpha \\ I\_c\beta \end{bmatrix} = \frac{2}{3} \begin{bmatrix} 1 & -\frac{1}{2} & -\frac{1}{2} \\ 0 & -\frac{\sqrt{3}}{2} & +\frac{\sqrt{3}}{2} \end{bmatrix} \begin{bmatrix} I\_cu \\ I\_cv \\ I\_cw \end{bmatrix} \qquad \cdots (14)$$

Two components other than the 0 phase component of the three-phase current commands (Irf_cα, Irf_cβ, Irf_c0) from the three-to-three phase converter 701 are compared with the two-phase circulating currents (I_cα, I_cβ) and input to a proportional-integral controller 703.

Reference sign 704 denotes a two-to-three phase inverter that converts the two-phase voltage commands (Vrf_cα, Vrf_cβ) from the proportional-integral controller 703 into three-phase arm voltage command AC components (Vrf_cu, Vrf_cv, Vrf_cw) and outputs them.

The two-to-three phase inverter 704 calculates the relationship between the input and the output in Formula (15). Formula 15:

$$\begin{bmatrix} Vrf\_cu \\ Vrf\_cv \\ Vrf\_cw \end{bmatrix} = \begin{bmatrix} 1 & 0 \\ -\dfrac{1}{2} & -\dfrac{\sqrt{3}}{2} \\ -\dfrac{1}{2} & +\dfrac{\sqrt{3}}{2} \end{bmatrix} \begin{bmatrix} Vrf\_c\alpha \\ Vrf\_c\beta \end{bmatrix} \qquad \cdots (15)$$

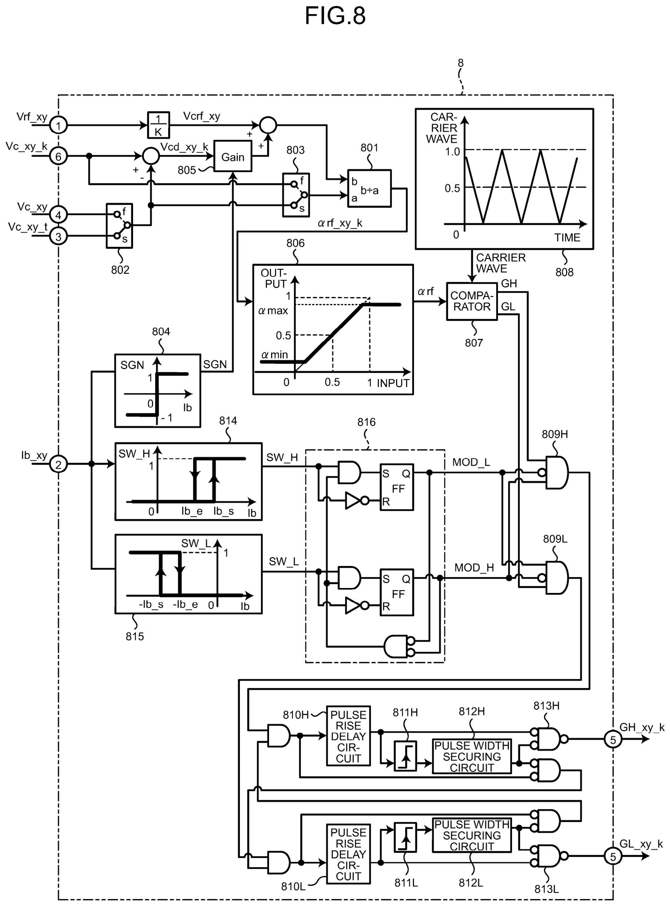

FIG. 8 is a diagram illustrating a configuration of the unit converter control device 8 according to the first embodiment of the present invention.

An arm voltage command (Vrf_xy) output from the power converter control device 4 for each arm power circuit 21 is multiplied by 1/K to generate a unit converter voltage command (Vcrf_xy).

Reference sign 802 denotes a signal switcher that outputs a capacitor arm average voltage signal (Vc_xy) when the f-terminal is selected, and outputs a capacitor arm moving average voltage signal (Vc_xy_t) when the s-terminal is selected. According to Patent Literature 6, the f-terminal is selected.

The capacitor voltage signal (Vc_xy_k) is compared with the output of the signal switcher 802 to generate a capacitor voltage deviation (Vcd_xy_k).

Reference sign 803 denotes a signal switcher that selects the capacitor voltage signal (Vc_xy_k) when the f-terminal is selected, and selects the output of the signal switcher 802 when the s-terminal is selected and inputs it to a divider 801. According to Patent Literature 6, the f-terminal is selected.

A current sign detector 804 detects the sign of a unit converter current (Ib_xy), and switches Gain of a gain 805 to positive when the unit converter current (Ib_xy) has a positive sign, and switches Gain of the gain 805 to negative when the unit converter current (Ib_xy) has a negative sign. The output of the gain 805 is energized to the unit converter voltage command (Vcrf_xy) and input to the divider 801.

The divider 801 outputs a modulation factor command (αrf_xy_k) obtained by normalizing the unit converter voltage command (Vcrf_xy), after the output of the gain 805 is energized, by the capacitor arm average voltage signal (Vc_xy) or the capacitor arm moving average voltage signal (Vc_xy_t).

Reference sign 806 denotes a limiter that generates a modulation factor signal (αrf), in which the input modulation factor command (αrf_xy_k) is limited between a maximum value αmax smaller than 1 and a minimum value αmin larger than 0, and outputs it to a comparator 807.

Reference sign 808 denotes a carrier wave output unit that outputs a triangular wave having a maximum value of 1 and a minimum value of 0 to the comparator 807 as a carrier wave.

The comparator 807 sets an output signal (GH) to level 1 and sets an output signal (GL) to level 0 when the modulation factor signal (αrf) is greater than the carrier wave, and outputs them. The comparator 807 sets the output signal (GH) to level 0 and sets the output signal (GL) to level 1 when the modulation factor signal (αrf) is less than the carrier wave, and outputs them.

Reference signs 809H and 809L denote switching current limiters. When the unit converter current (Ib_xy) does not exceed a threshold, which will be described later, during normal operation, the switching current limiter 809H outputs the output signal (GH) as it is, and the switching current limiter 809L outputs the output signal (GL) as it is.

Reference signs 810H and 810L denote pulse rise delay circuits that ensure a dead time determined by characteristics of the self-extinguishing elements 31 and the diodes 33 of the unit converter 3 illustrated in FIG. 3 to prevent a short circuit of the capacitor 32.

Reference signs 811H and 811L denote rising detection circuits that input rising detection results of the outputs of the pulse rise delay circuits 810H and 810L to pulse width securing circuits 812H and 812L, and secure a level 1 period of a minimum firing time determined by characteristics of the self-extinguishing elements 31 and the diodes 33 to prevent damage to the self-extinguishing elements 31 and the diodes 33 due to incomplete switching.

The outputs of the pulse rise delay circuits 810H and 810L and the outputs of the pulse width securing circuits 812H and 812L are input to OR circuits 813H and 813L, and a gate control command (GH_xy_k) to the upper self-extinguishing element (31H) and a gate control command (GL_xy_k) to the lower self-extinguishing element (31L) are alternately output.

Reference sign 814 denotes a comparator with hysteresis that switches an output (SH_H) from level 0 to level 1 when the unit converter current (Ib_xy) exceeds a set value (Ib_s) in the positive direction, and switches the output (SH_H) from level 1 to level 0 when the unit converter current (Ib_xy) falls below a positive set value (Ib_e) having an absolute value less than the set value (Ib_s) .

Reference sign 815 denotes a comparator with hysteresis that switches an output (SH_L) from level 0 to level 1 when the unit converter current (Ib_xy) falls below a set value (-Ib_s) in the negative direction, and switches the output (SH_L) from level 1 to level 0 when the unit converter current (Ib_xy) exceeds a set value (-Ib_e).

Reference sign 816 denotes a mode switcher that exclusively outputs a mode switching signal (MOD_H) at level 1 when an output (SW_H) of the comparator 814 with hysteresis is at level 1, and exclusively outputs a mode switching signal (MOD_L) at level 1 when an output (SW_L) of the comparator 815 with hysteresis is at level 1.

When the mode switching signal (MOD_H) is at level 1, the switching current limiter 809H fixedly outputs level 1, and the switching current limiter 809L fixedly outputs level 0.

When the mode switching signal (MOD_L) is at level 1, the switching current limiter 809L fixedly outputs level 1, and the switching current limiter 809H fixedly outputs level 0.

The above configuration of the first embodiment can solve the problem.

According to the above embodiment of the leg circuit 2, the positive-side arm power circuit 21Px, the positive-side inductive element 22Px, the intermediate terminal (ACx) of the leg circuit 2, the negative-side inductive element 22Nx, the negative-side arm power circuit 21Nx, and the negative-side terminal (Nx) of the leg circuit 2 are connected in this order from the positive-side terminal (Px) of the leg circuit 2.

As another connection order, especially in a case of using an air-core reactor, they need to be installed in another magnetic shielding chamber in order to avoid magnetic mutual interference between the positive and negative-side inductive elements. In such a case, by rearranging the arm power circuits and the inductive elements, the positive-side inductive element 22Px, the positive-side arm power circuit 21Px, the intermediate terminal (ACx) of the leg circuit 2, the negative-side arm power circuit 21Nx, the negative-side inductive element 22Nx, and the negative-side terminal (Nx) of the leg circuit 2 may be connected in this order from the positive-side terminal (Px) of the leg circuit 2.

According to the above embodiment of the power converter control device 4, the output switcher 405 selects the output of the reactive power regulator 404 as the reactive power component (Irf_ad) of the AC current command, which has an effect of relatively easily suppressing the overcurrent flowing through the MMC converter in the event of a system fault. The output switcher 405 selects the output of the AC voltage regulator 406, which has an effect of contributing to the stability of the system by rapidly supplying reactive power when the voltage drops in the event of a system fault as in a conventional commercial power generation facility.

According to the embodiment of the unit converter control device 8 having the above configuration, by selectively outputting the f-terminal side inputs of the signal switchers 802 and 803, control is performed using the instantaneous capacitor voltage signal (Vc_xy_k) and capacitor arm average voltage signal (Vc_xy), and it is possible to achieve control with high responsiveness. In particular, it is suitable for high-voltage applications in which the AC power supply voltage is 100 kV or higher, the number of series connections K of the unit converters 3 is large, and the capacitor capacity coefficient Kc is large. In addition, since high-speed simultaneous communication between the arms is unnecessary, control with high responsiveness can be achieved with an inexpensive communication system.

According to the embodiment of the unit converter control device 8 having the above configuration, by selectively outputting the s-terminal side inputs of the signal switchers 802 and 803, the reference value of the capacitor voltage deviation (Vcd_xy_k) between the unit converters 3 and the reference value of the normalization of the modulation factor command ($\alpha$rf_xy_k) can be the capacitor arm moving average voltage signal (Vc_xy_t) with small temporal fluctuation, and thus, it is possible to stabilize the operation of the unit converter control device 8 in the event of system fault propagation and to suppress the remaining at the upper and lower limits due to the unnecessarily limiting by the limiter 806 causing the loss of control. In particular, it is suitable for medium-voltage applications in which the AC power supply voltage is 6 kV to 30 kV, the number of series connections K of the unit converters 3 is smaller than that for high-voltage applications, and the capacitor capacity coefficient Kc has to be reduced due to strict dimensional limitations.

According to the embodiment of the unit converter control device 8 having the above configuration, since the modulation factor signal ($\alpha$rf) is limited between the maximum value $\alpha$max and the minimum value $\alpha$min by the limiter 806, it is possible to prevent short-time gate control commands (GH_xy_k, GL_xy_k) that causes damage to the self-extinguishing elements 31 and the diodes 33.

According to the embodiment of the unit converter control device 8 having the above configuration, the mode switcher 816 changes the level of the mode switching signals (MOD_H, MOD_L) in a short time by using the comparators 814 and 815 with hysteresis when the peak of the absolute value of the unit converter current input (Ib_xy) slightly exceeds the set value (Ib_s) and falls below the set value (Ib_s) after a short time, and thus, it is possible to extend the operation delay time by the pulse rise delay circuit 810 and the pulse width securing circuit 812 in the subsequent stages and to prevent the problem of impairing the continuity of operation in the event of a system fault.

According to the embodiment having the above configuration, in the period in which the unit converter current input (Ib_xy) of the unit converter control device 8 exceeds the set value (Ib_s) of the positive sign, the gate control command (GL_xy_k) to the lower self-extinguishing element (31L) is energized to extinguish the gate control command (GL_xy_k) to the upper self-extinguishing element (31H) regardless of the modulation factor command ($\alpha$rf_xy_k), and, in the period in which the unit converter current input (Ib) falls below the set value (-Ib_s) of the negative sign, the gate control command (GL_xy_k) to the upper self-extinguishing element (31H) is energized to extinguish the gate control command (GL_xy_k) to the lower self-extinguishing element (31L) regardless of the modulation factor command (αrf_xy_k), and thus, it is possible to suppress the current absolute value at the time of switching to be the set value (Ib_s) or less, to output, to the AC current control device 6, the total capacitor average voltage (Vc_ave) which rises due to the operation of the unit converter control device 8 after the active power component (Irf_aq) of the AC current command is adjusted by the capacitor voltage regulator 403, and to suppress the capacitor voltage increase by controlling the alternating currents, thereby achieving the problem.

Second Embodiment

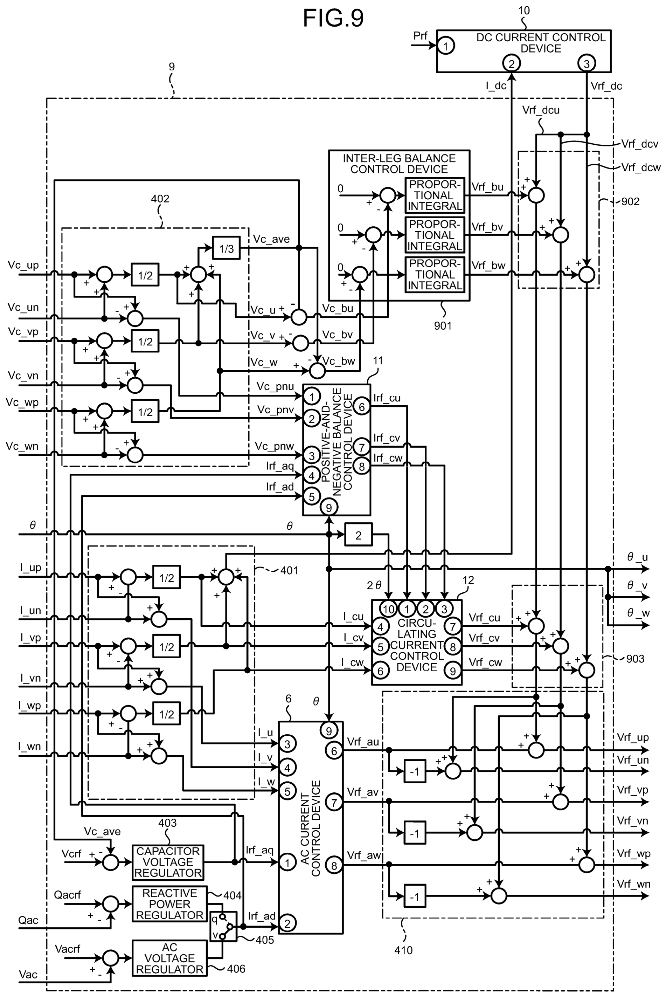

FIG. 9 is a diagram illustrating a configuration of a power converter control device according to a second embodiment of the present invention. FIG. 9 is based on the configuration disclosed in Patent Literature 7.

The same constituent elements as those of the power converter control device 4 illustrated in FIG. 4 are denoted by the same reference signs. The constituent elements having the same reference signs as those in FIG. 4 will not be described in order to avoid duplication. An MMC converter according to the second embodiment has a configuration in which the power converter control device 4 of the MMC converter according to the first embodiment is replaced with a power converter control device 9, and the constituent elements other than the power converter control device 9 will not be described. The power converter control device 9 is connected with a DC current control device 10, which will be described later.

The power converter control device 9 outputs a direct current (I_dc) to the DC current control device 10, and receives a DC voltage command (Vrf_dc) from the DC current control device 10.

The power converter control device 9 includes a positive-and-negative balance control device 11, a circulating current control device 12, an inter-leg balance control device 901, and adders 902 and 903.

The positive-and-negative balance control device 11 receives the positive-and-negative difference voltages (Vc_pnu, Vc_pnv, Vc_pnw) from the capacitor voltage calculator 402, two-phase AC current command values (Irf_aq, Irf_ad), and a reference phase (θ), and outputs three-phase circulating current commands (Irf_cu, Irf_cv, Irf_cw).

The circulating current control device 12 receives the through currents (I_cu, I_cv, I_cw), the three-phase circulating current commands (Irf_cu, Irf_cv, Irf_cw), and a double angle (2θ) of the reference phase, and outputs the three-phase arm voltage command circulating components (Vrf_cu, Vrf_cv, Vrf_cw).

The inter-leg balance control device 901 performs proportional integral calculation such that leg voltage deviations (Vc_bu, Vc_bv, Vc_bw) become zero, and outputs three-phase arm voltage command leg balance components (Vrf_bu, Vrf_bv, Vrf_bcw).

The arm voltage command calculator 410 and the adders 902 and 903 output arm voltage commands (Vrf_up, Vrf_un, Vrf_vp, Vrf_vn, Vrf_wp, Vrf_wn).

The arm voltage commands (Vrf_up, Vrf_un, Vrf_vp, Vrf_vn, Vrf_wp, Vrf_wn) are calculated by Formula (16). Formula 16:

$$Vrf\_up = +Vrf\_au + Vrf\_bu + Vrf\_cu + Vrf\_du$$

$$Vrf\_un = -Vrf\_au + Vrf\_bu + Vrf\_cu + Vrf\_du$$

$$Vrf\_vp = +Vrf\_av + Vrf\_bv + Vrf\_cv + Vrf\_dv$$

$$Vrf\_vn = -Vrf\_av + Vrf\_bv + Vrf\_cv + Vrf\_dv \qquad \cdots (16)$$

$$Vrf\_wp = +Vrf\_aw + Vrf\_bw + Vrf\_cw + Vrf\_dw$$

$$Vrf\_wn = -Vrf\_aw + Vrf\_bw + Vrf\_cw + Vrf\_dw$$

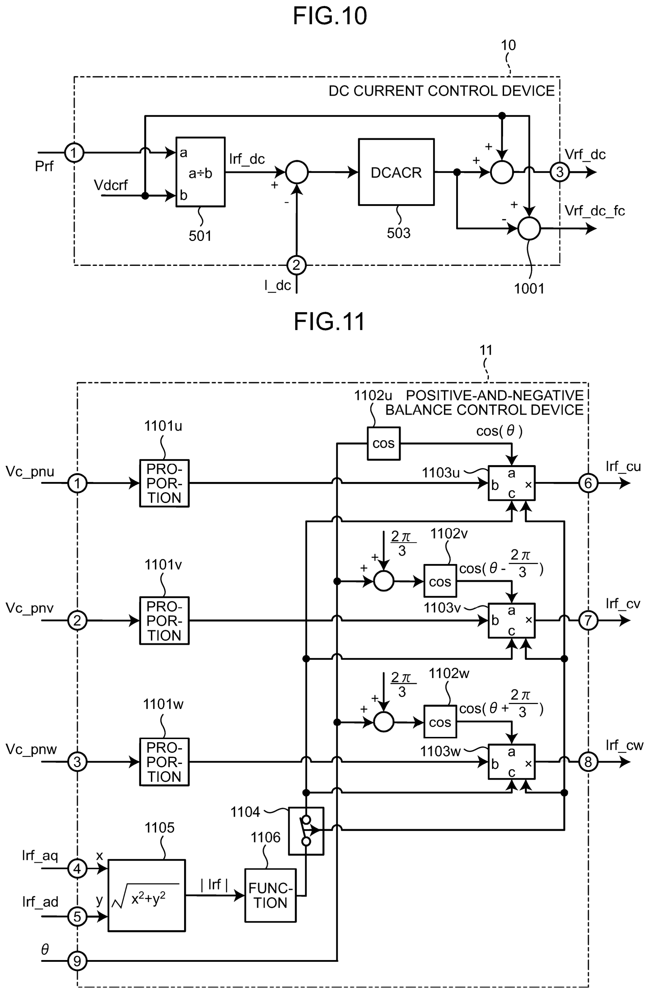

FIG. 10 is a diagram illustrating a configuration of the DC current control device 10 according to the second embodiment of the present invention. The same constituent elements as those of the DC current control device 5 according to the first embodiment illustrated in FIG. 5 are denoted by the same reference signs. The constituent elements having the same reference signs as those of the DC current control device 5 according to the first embodiment illustrated in FIG. 5 will not be described in order to avoid duplication.

Reference sign 1001 denotes an adder that inverts the sign of the output of the DC current regulator 503 to energize it with a DC voltage command (Vdcrf), and outputs it as an arm voltage command DC component (Vrf_dc_fc) to another MMC converter, which is connected to the DC terminals (P, N) of the MMC converter 1 back-to-back although not illustrated in FIG. 1.

FIG. 11 is a diagram illustrating a configuration of the positive-and-negative balance control device 11 according to the second embodiment of the present invention.

The positive-and-negative difference voltages (Vc_pnu, Vc_pnv, Vc_pnw) from the capacitor voltage calculator 402 are input to gains 1101u, 1101v, and 1101w. The reference phase ($\theta$) is shifted in the order of the phases and input to cosine wave generators 1102u, 1102v, and 1102w.

The outputs of the gains 1101u, 1101v, and 1101w and the outputs of the cosine wave generators 1102u, 1102v, and 1102w are input to first input terminals (a) and second input terminals (b) of multipliers 1103u, 1103v, and 1103w for each phase.

Reference sign 1105 denotes an absolute value calculator that outputs vector absolute values of the two-phase AC current command values (Irf_aq, Irf_ad), inputs them to a function generator 1106, and inputs the output of the function generator 1106 to a first terminal of a switcher 1104.

A second terminal of the switcher 1104 is branched to input the output of the function generator 1106 to third input terminals (c) of the multipliers 1103u, 1103v, and 1103w. In addition, an open/close signal of the switcher 1104 is input to the multipliers 1103u, 1103v, and 1103w.

The multipliers 1103u, 1103v, and 1103w output multiplication results ($a \times b \times c$) of the first to third inputs when the switcher 1104 is closed, and output multiplication results ($a \times b$) of the first and second inputs when the switcher 1104 is open.

The outputs of the multipliers 1103u, 1103v, and 1103w are output as the three-phase current commands (Irf_cu, Irf_cv, Irf_cw).

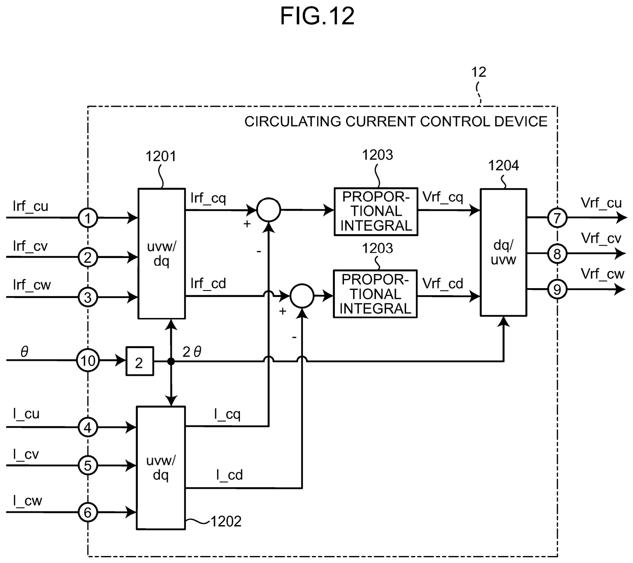

FIG. 12 is a diagram illustrating a configuration of the circulating current control device 12 according to the second embodiment of the present invention.

Reference signs 1201 and 1202 denote three-to-two phase converters that convert the three-phase current commands (Irf_cu, Irf_cv, Irf_cw) and the through currents (I_cu, I_cv, I_cw) into two-phase circulating current commands (Irf_cq, Irf_cd) and circulating currents (I_cq, I_cd) at a double angle ($2\theta$) of the reference phase ($\theta$), and compare them for each phase and input them to a proportional-integral controller 1203.

The three-to-two phase converters 1201 and 1202 calculate a relationship between the inputs and outputs in Formulas (17) and (18).

Formula 17:

$$\begin{bmatrix} Irf\_cq \\ Irf\_cd \end{bmatrix} = \frac{2}{3} \begin{bmatrix} \cos(2\theta) & \cos\left(2\theta + \frac{2}{3}\pi\right) & \cos\left(2\theta - \frac{2}{3}\pi\right) \\ \sin(2\theta) & \sin\left(2\theta + \frac{2}{3}\pi\right) & \sin\left(2\theta - \frac{2}{3}\pi\right) \end{bmatrix} \begin{bmatrix} Irf\_cu \\ Irf\_cv \\ Irf\_cw \end{bmatrix} \quad \cdots (17)$$

Formula 18:

$$\begin{bmatrix} I\_cq \\ I\_cd \end{bmatrix} = \frac{2}{3} \begin{bmatrix} \cos(2\theta) & \cos\left(2\theta + \frac{2}{3}\pi\right) & \cos\left(2\theta - \frac{2}{3}\pi\right) \\ \sin(2\theta) & \sin\left(2\theta + \frac{2}{3}\pi\right) & \sin\left(2\theta - \frac{2}{3}\pi\right) \end{bmatrix} \begin{bmatrix} I\_cu \\ I\_cv \\ I\_cw \end{bmatrix} \quad \cdots (18)$$

Reference sign 1204 denotes a two-to-three phase inverter that converts two-phase voltage commands (Vrf_cq, Vrf_cd) from the proportional-integral controller 1203 into the three-phase arm voltage command AC components (Vrf_cu, Vrf_cv, Vrf_cw) and outputs them.

The two-to-three phase inverter 1204 calculates the relationship between the input and the output in Formula (19).

Formula 19:

$$\begin{bmatrix} Vrf\_cu \\ Vrf\_cv \\ Vrf\_cw \end{bmatrix} = \begin{bmatrix} \cos(2\theta) & \sin(2\theta) \\ \cos\left(2\theta + \dfrac{2}{3}\pi\right) & \sin\left(2\theta + \dfrac{2}{3}\pi\right) \\ \cos\left(2\theta - \dfrac{2}{3}\pi\right) & \sin\left(2\theta - \dfrac{2}{3}\pi\right) \end{bmatrix} \begin{bmatrix} Vrf\_cq \\ Vrf\_cd \end{bmatrix} \qquad \cdots (19)$$

The above configuration of the second embodiment can solve the problem.

According to the above embodiment of the power converter control device 9, the output of the positive-and-negative balance control device 11 is directly connected to the circulating current control device 12 to perform current feedback control, and the inter-leg balance control device 901 is energized to the output side of the current feedback control to perform feedforward control.

In a case of the power converter control device 4 of the first embodiment, since both the positive-and-negative balance control device 407 and the inter-leg balance control device 408 use input signals of opposite sign while receiving the linear coupling of the arm average voltages of the six capacitors, and energize the outputs in parallel and input them to the circulating current control device 7, the cancellation of the effect between the two is unavoidable. In a case of the positive-and-negative balance control device 407, since the linear coupling of the capacitor arm average voltages serving as input signals include coefficients of positive and negative sign, it is not practical to utilize the integral gain.

According to the above configuration of the power converter control device 9, since the control is separately performed such that the positive-and-negative balance control device 11 is controlled by current feedback control and the inter-leg balance control device 901 is controlled by feedforward control, both have an effect of adjusting the deviation to zero with control that includes an integral term.

According to the above configuration of the DC current control device 10, unlike the DC current control device 5, a zero-phase component output (Irf_c0) of the circulating current control device 7 is not required.

Therefore, a frequency converter is formed by connecting the DC sides back-to-back, which has an effect that the DC current regulator 503 is shared by two MMC converters, the DC voltage command (Vrf_dc) and the DC voltage command (Vrf_dc_fc) to another MMC converter are branched and output by the adder 1001, and the DC current control device 10 for the two MMC converters is achieved with the minimum device configuration.

According to the above configuration of the positive-and-negative balance control device 11, when the switcher 1104 is opened, the three-phase circulating current command (Irf_cu, Irf_cv, Irf_cw) at double the frequency of the AC power supply is calculated and output only with the positive-and-negative difference voltages (Vc_pnu, Vc_pnv, Vc_pnw) and the reference phase ($\theta$), which has an effect of configuring the positive-and-negative balance control device 11 with a simple configuration from a minimum set of input signals.

According to the above configuration of the positive-and-negative balance control device 11, when the switcher 1104 is closed, the amplitude of the three-phase circulating current commands (Irf_cu, Irf_cv, Irf_cw) can be adjusted using the absolute value calculator 1105 and the function generator 1106 in addition to the positive-and-negative difference voltages (Vc_pnu, Vc_pnv, Vc_pnw) and the reference phase ($\theta$), which has an effect of adjusting the circulating current command amplitude close to the rated current according to the AC current command amplitude, suppressing the circulating currents to a necessary minimum, suppressing a loss due to the circulating currents, and increasing the efficiency of the MMC converter.

In addition, the lower limit limiter is provided in the function generator 1106, which has an effect of ensuring minimum circulating currents to the balance of the positive-and-negative difference voltages (Vc_pnu, Vc_pnv, Vc_pnw) under light load conditions to achieve stable operation.

According to the above configuration of the circulating current control device 12, since the integral term is responsible for the output of the proportional-integral controller 1203 in steady-state operation, it is possible to ensure a wide range of fluctuation allowed for the proportionality that requires immediate response in the transient state where the output is limited by the limiter. Therefore, this has an effect of achieving a high-speed response of the circulating current control device 12.

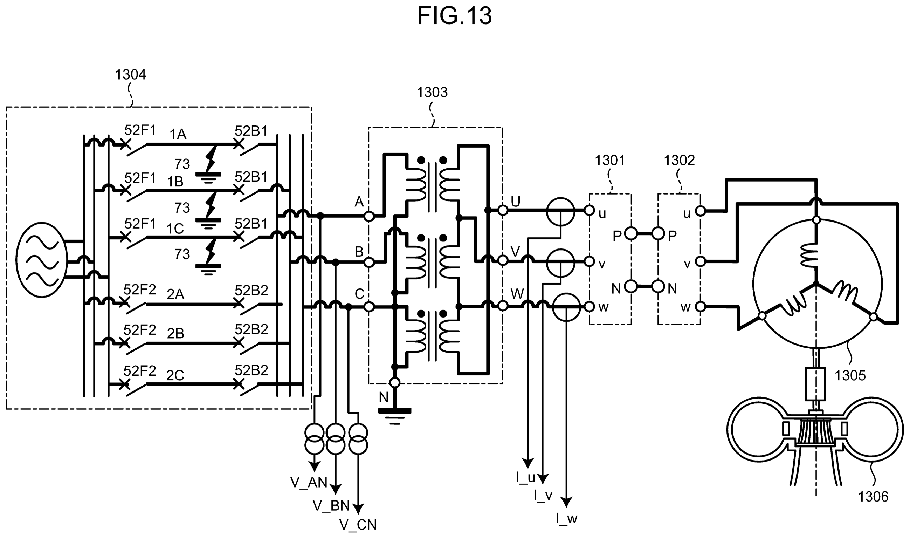

FIG. 13 illustrates a case where the DC ends of two MMC converters 1301 and 1302 are connected back-to-back to form a frequency converter.

The AC end of MMC converter 1301 is connected to delta winding of a transformer 1303. The other terminal of the transformer 1303 is connected to the trailing end of a two-circuit power transmission line 1304.

The AC end of the MMC converter 1302 is connected to a synchronous machine 1305 to output a variable frequency, and a turbomachine (pump turbine) 1306 is directly connected to a rotation shaft.

The two-circuit power transmission line 1304 includes leading-end circuit breakers 52F1 and 52F2 and trailing-end circuit breakers 52B1 and 52B2. Hereinafter, the three phases of a first circuit are referred to as (1A, 1B, 1C), and the three phases of a second circuit are referred to as (2A, 2B, 2C).

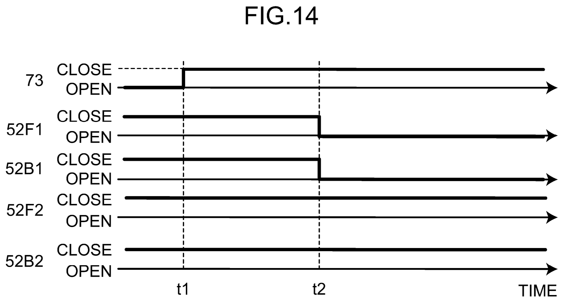

FIG. 14 illustrates a time chart. The time chart of FIG. 14 shows operations of the leading-end circuit breakers 52F1 and 52F2 and the trailing-end circuit breakers 52B1 and 52B2 when a ground fault occurs in the two-circuit power transmission line 1304 of FIG. 13. At time t1, a three-phase ground fault occurs in the first circuit at the close end of the transformer 1303, and 73 is short-circuited. At time t2, the leading-end circuit breaker 52F1 and the trailing-end circuit breaker 52B1 of the first circuit are operated to open.

Hereinafter, effects of the second embodiment of the present invention are described in a transient phenomenon when the close-end three-phase ground fault in FIG. 14 occurs during the power generation rated output operation of the synchronous machine 1305.

In the MMC converter 1302, the number of series connection stages of the unit converters 3 in each arm is K=6.

The impedance of the transformer 1303 is 6% based on the capacitance of the MMC converter 1302. This impedance value corresponds to the MMC converter described in Patent Literature 8, and is a value when the capacity of the MMC converter is made smaller than the capacities of the existing synchronous machine 1305 and the transformer 1303. In this case, since the impedance in terms of self-capacity of the MMC converter 1302 is smaller than that of a transformer of a normal commercial power generation facility, the overcurrent value in the event of system ground fault propagation increases. In addition, the change in the capacitor voltage of the MMC converter also increases, which is a condition for consideration on the harsh side.

Before the ground fault occurred, the operation is performed at rated power generation output and rated power factor (lagging 0.95). When the peak value of the arm currents (I_up, I_vp, I_wp, I_un, I_vn, I_wn) of the MMC converter 1302 is 1, the AC peak value of the arm current AC component is 0.7 and the peak value of the DC component is 0.3.

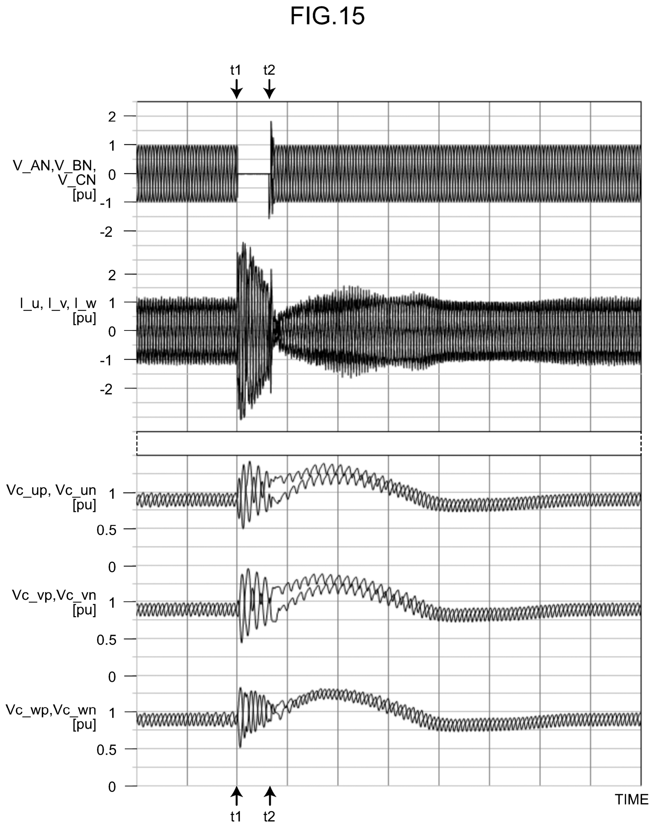

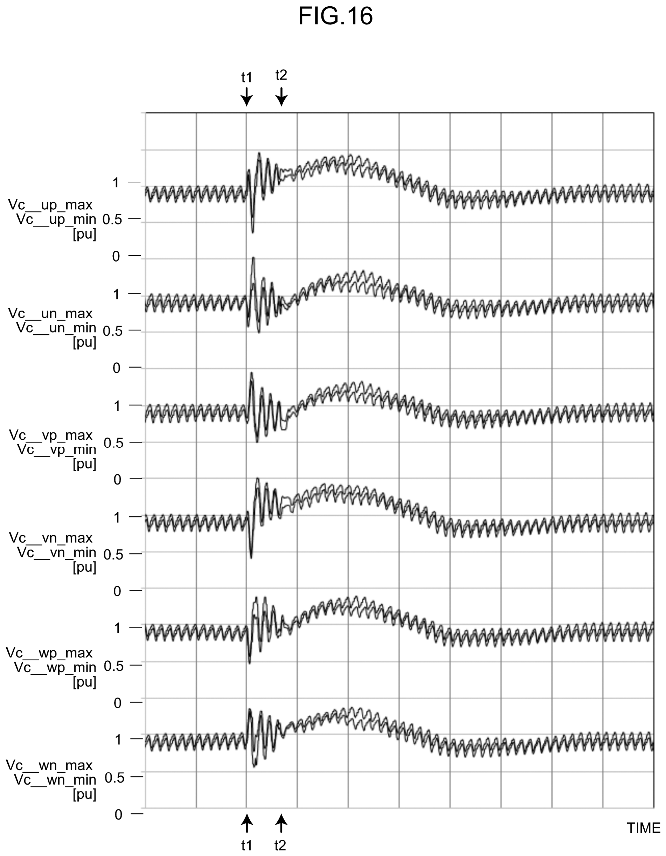

FIGS. 15 and 16 illustrate waveforms when the switching current threshold (Ib_s) of the comparators 814 and 815 with hysteresis of the unit converter control device 8 according to the second embodiment of the present invention illustrated in FIG. 8 is set to 2.85 times or more the rated arm current and the switching current is not limited.

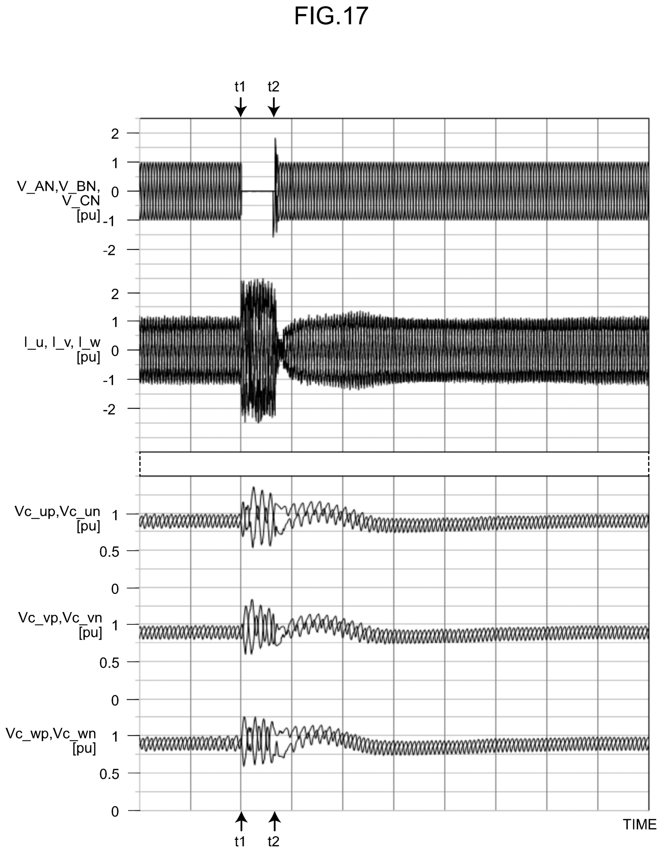

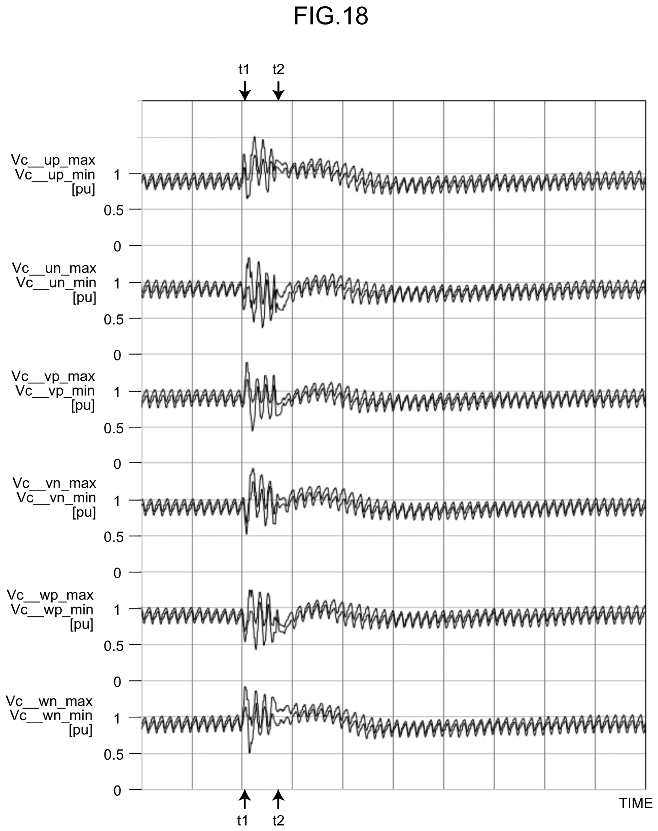

FIGS. 17 and 18 illustrate waveforms when the switching current threshold (Ib_s) of the comparators 814 and 815 with hysteresis of the unit converter control device 8 according to the second embodiment of the present invention illustrated in FIG. 8 is set to 1.8 times the rated arm current and the switching current is limited.

The upper parts of FIGS. 15 and 17 each show that the waveforms of power transmission-line side phase voltages (V_AN, V_BN, V_CN) of the transformer 1303 and the alternating currents (I_u, I_v, I_w) on the MMC converter 1301 side are normalized with the rated value.

The lower parts of FIGS. 15 and 17 each show that the capacitor average voltages (Vc_up, Vc_vp, Vc_wp, Vc_un, Vc_vn, Vc_wn) for each arm are normalized with the rated voltage of the capacitor.

FIGS. 16 and 18 show that the maximum value and the minimum value of the capacitor 32 of the (K=6) stage unit converter 3 (see FIG. 3) constituting each arm of the MMC converter 1302 are normalized with the rated voltage of the capacitor 32.

The power transmission-line side phase voltages (V_AN, V_BN, and V_CN) are not significantly different between FIGS. 15 and 17.

Comparing the alternating currents (I_u, I_v, I_w) in FIG. 15 with those in FIG. 17, the peak current in the period from the occurrence of the ground fault at time t1 to the circuit breaker operation at time t2 reaches 3 times the rated current when the switching current is not limited in FIG. 15, whereas the peak current is suppressed to 2.5 times the rated current when the switching current is limited in FIG. 17.

The capacitor average voltages are not significantly different between FIGS. 15 and 17, and the maximum and minimum capacitor voltages are not significantly different between FIGS. 16 and 18.

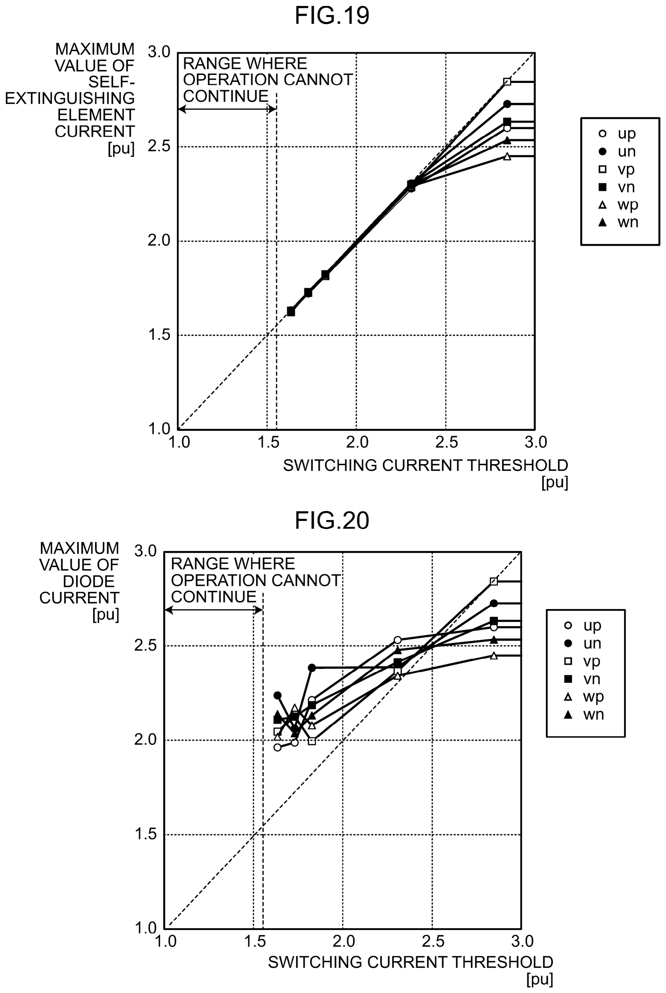

FIGS. 19 to 22 illustrate characteristic changes when the switching current threshold (Ib_s) is gradually reduced from 2.85 times.

The switching current threshold (Ib_s) has a lower limit, and if it is reduced to 1.55 times or less, the balance of the capacitor voltages cannot be maintained, and the MMC converter 1302 cannot continue to operate.

FIG. 19 illustrates the switching current threshold value (Ib_s) and the maximum value of the self-extinguishing element (31H, 31L) current for each of the six arms.

As can be seen from FIG. 19, the self-extinguishing element (31H, 31L) current is suppressed to the switching current threshold (Ib_s) or less within the range of the operable switching current threshold (Ib_s).

FIG. 20 illustrates the switching current threshold (Ib_s) and the maximum value of antiparallel diode (33H, 33L) current for each of the 6 arms.

The antiparallel diode (31H, 31L) current increases even after switching from the self-extinguishing element to the antiparallel diode at the switching current threshold (Ib_s), and thus exceeds the switching current threshold (Ib_s) unlike the self-extinguishing element current as illustrated in FIG. 20.

Within the range of the operable switching current threshold (Ib_s), the maximum value of the antiparallel diode (33H, 33L) current decreases with the switching current threshold (Ib_s).

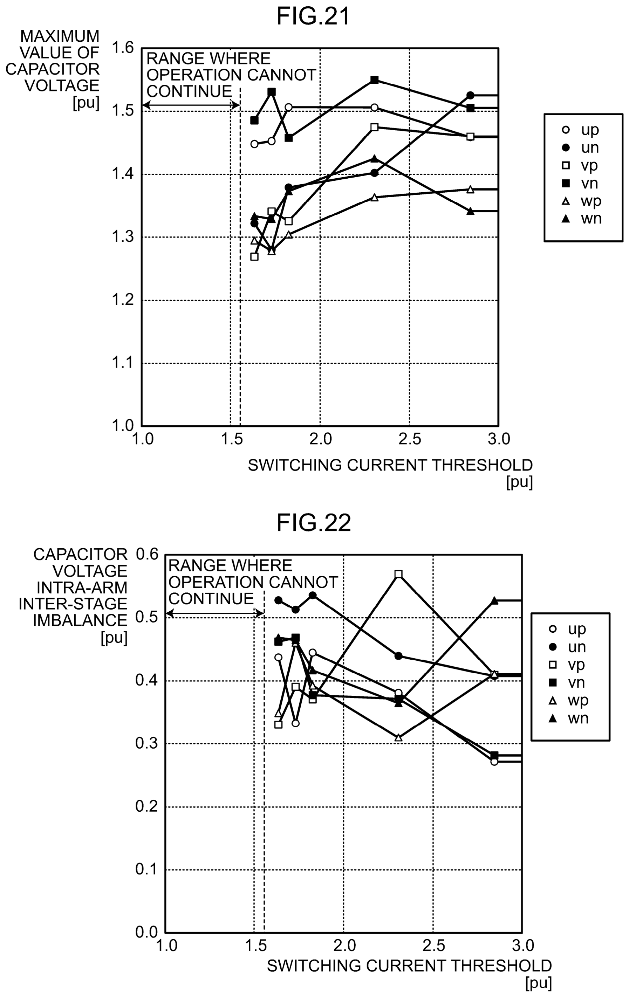

FIG. 21 illustrates the switching current threshold (Ib_s) and the maximum value of the (K=6) capacitor voltages constituting the arm for each of the six arms.

When the switching is forcibly performed at the switching current threshold (Ib_s), the capacitor voltage increases in principle as described above with reference to FIG. 32. However, as illustrated in FIG. 21, in the range of the operable switching current threshold (Ib_s), the maximum value of the capacitor voltage does not change significantly.

FIG. 22 illustrates the switching current threshold value (Ib_s) and the difference between the maximum value and the minimum value of the (K=6) capacitor voltages constituting the arm (hereinafter, referred to as "inter-stage imbalance") for each of the six arms.

As illustrated in FIG. 22, when the switching current threshold (Ib_s) is reduced, the inter-stage imbalance increases and reaches the lower limit value where it diverges and the operation cannot continue.

As described above, as can be seen from the alternating current (I_u, I_v, I_w) waveforms illustrated in FIG. 17, the switching current threshold value (Ib_s) is limited in the second embodiment of the present invention, which has an effect of suppressing the overcurrent values of the MMC converter 1302 and the transformer 1302. This has an effect of improving reliability, and increasing the capacity or reducing the size of the device.

As described above, as can be seen from the maximum value of the self-extinguishing element (31H, 31L) current illustrated in FIG. 19, the switching current threshold (Ib_s) is limited in the second embodiment of the present invention, which has not only an effect of suppressing the switching current to prevent damage to the self-extinguishing elements (31H, 31L), but also an effect of suppressing the maximum current value and the junction temperature rise to improve reliability, and increasing the capacity of the device or reducing the size of the self-extinguishing elements (31H, 31L) by using the same self-extinguishing elements (31H, 31L).

As described above, as can be seen from the maximum value of the antiparallel diode (33H, 33L) current illustrated in FIG. 20, the switching current threshold (Ib_s) is limited in the second embodiment of the present invention, which has not only an effect of suppressing the switching current to prevent damage to the antiparallel diodes (33H, 33L), but also an effect of suppressing the maximum current value and the junction temperature rise to improve reliability, and increasing the capacity of the device or reducing the size of the antiparallel diodes (33H, 33L) by using the same antiparallel diodes (33H, 33L).

As described above, as can be seen from the maximum value of the (K=6) capacitor voltages constituting the arm illustrated in FIG. 21, the capacitor voltage rise, which is a side effect of limiting the switching current threshold (Ib_s) of the present invention, can be suppressed by the power converter control device 9 of the second embodiment, thereby achieving the problem.

Third Embodiment

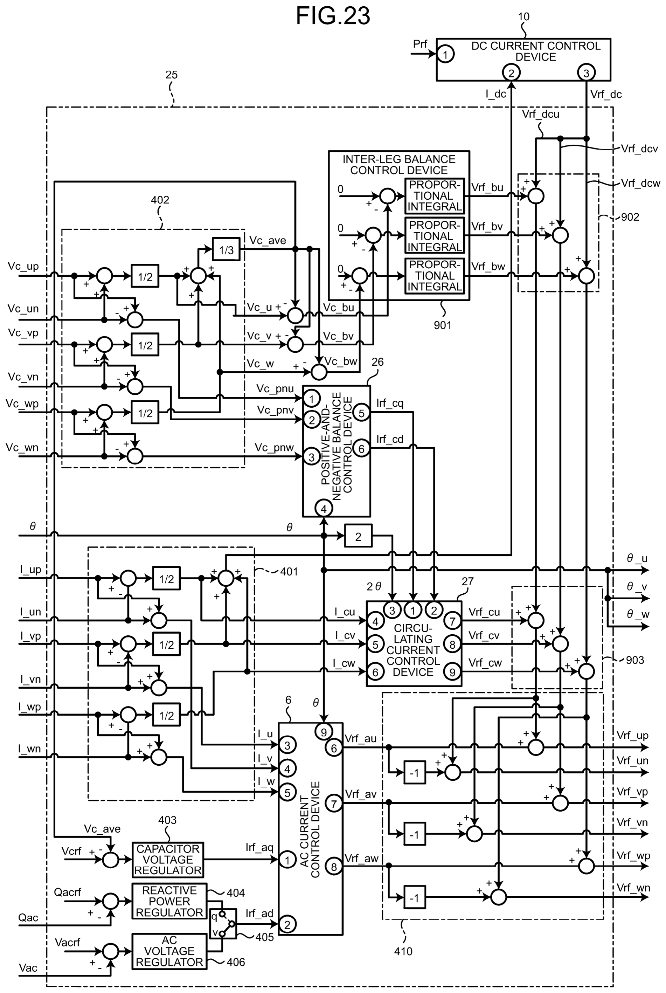

FIG. 23 is a diagram illustrating a configuration of a power converter control device 25 according to a third embodiment of the present invention.

The same constituent elements as those of the power converter control device 4 illustrated in FIG. 4 are denoted by the same reference signs. In addition, the same constituent elements as those of the power converter control device 9 illustrated in FIG. 9 are denoted by the same reference signs. The constituent elements having the same reference signs as those in FIGS. 4 and 9 will not be described in order to avoid duplication. An MMC converter according to the third embodiment has a configuration in which the power converter control device 4 of the MMC converter according to the first embodiment is replaced with a power converter control device 25, and the constituent elements other than the power converter control device 25 will not be described.

The power converter control device 25 includes a positive-and-negative balance control device 26 and a circulating current control device 27.

The positive-and-negative balance control device 26 receives the positive-and-negative difference voltages (Vc_pnu, Vc_pnv, Vc_pnw) from the capacitor voltage calculator 402 and the reference phase ($\theta$), and outputs two-phase circulating current commands (Irf_cq, Irf_cd).

The circulating current control device 27 receives the through currents (I_cu, I_cv, I_cw), the two-phase circulating current commands (Irf_cq, Irf_cd), and a double angle ($2\theta$) of the reference phase, and outputs the three-phase arm voltage command circulating components (Vrf_cu, Vrf_cv, Vrf_cw).

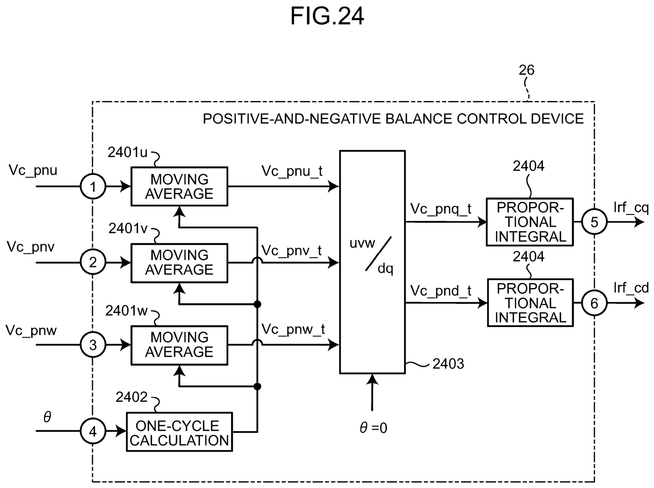

FIG. 24 is a diagram illustrating a configuration of the positive-and-negative balance control device 26 according to the third embodiment of the present invention.

The positive-and-negative difference voltages (Vc_pnu, Vc_pnv, Vc_pnw) from the capacitor voltage calculator 402 are input to moving average calculators 2401u, 2401v, and 2401w, and the reference phase ($\theta$) is input to a one-cycle calculation counter 2402. The one-cycle calculation counter 2402 calculates one cycle of the AC power supply, and the moving average calculators 2401u, 2401v, and 2401w calculate one-cycle moving averages (Vc_pnu_t, Vc_pnv_t, Vc_pnw_t) of the positive-and-negative difference voltages (Vc_pnu, Vc_pnv, Vc_pnw) based on the calculation result by the one-cycle calculation counter 2402 and input the calculated values to the three-to-two phase converter 2403.

The three-to-two phase converter 2403 calculates the relationship between the input and the output in Formula (20).

Formula 20:

$$\begin{bmatrix} Vc\_pnq\_t \\ Vc\_pnd\_t \end{bmatrix} = \frac{2}{3} \begin{bmatrix} 1 & -\dfrac{1}{2} & -\dfrac{1}{2} \\ 0 & -\dfrac{\sqrt{3}}{2} & +\dfrac{\sqrt{3}}{2} \end{bmatrix} \begin{bmatrix} Vc\_pnu\_t \\ Vc\_pnv\_t \\ Vc\_pnw\_t \end{bmatrix} \qquad \cdots (20)$$

The outputs (Vc_pnq_t, Vc_pnd_t) of the three-to-two phase converter 2403 are input to a proportional-integral controller 2404, and two-phase circulating current command values (Irf_cq, Irf_cd) are output.

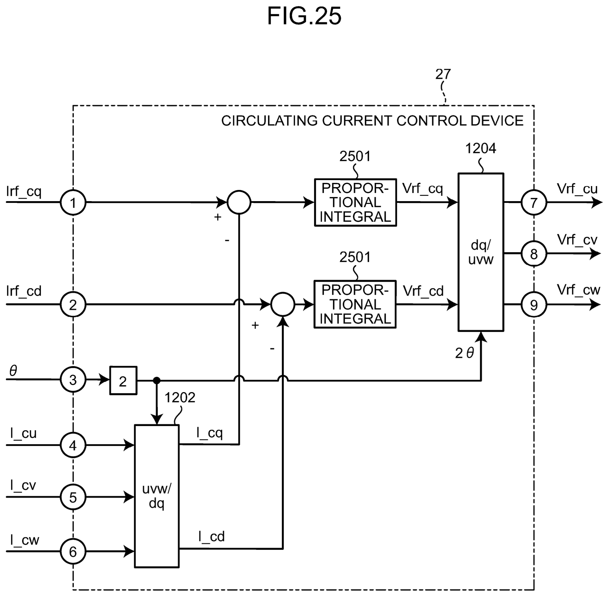

FIG. 25 is a diagram illustrating a configuration of the circulating current control device 27 according to the third embodiment of the present invention.

The same constituent elements as those of the circulating current control device 12 illustrated in FIG. 12 are denoted by the same reference signs. The constituent elements having the same reference signs as those in FIG. 12 will not be described in order to avoid duplication.

The two-phase circulating current commands (Irf_cq, Irf_cd) and the circulating currents (I_cq, I_cd) are compared for each phase and input to a proportional-integral controller 2501.

The two-phase voltage commands (Vrf_cq, Vrf_cd) from the proportional-integral controller 2501 are input to the two-to-three phase inverter 1204, and the three-phase arm voltage command AC components (Vrf_cu, Vrf_cv, Vrf_cw) are output.

The above configuration of the third embodiment can solve the problem.

According to the above configuration of the positive-and-negative balance control device 26, the moving average values (Vc_pnu_t, Vc_pnv_t, Vc_pnw_t) of the positive-and-negative difference voltages of one cycle of the AC power supply frequency input to the three-to-two phase converter 2403 become direct currents in a steady state, which has an effect of performing stable operation even if the measurement cycle of the capacitor average voltage of each arm and the calculation cycle of the moving average are lengthened. This has an effect of performing stable operation of the MMC converters with an inexpensive control device and communication device.

According to the above configuration of the circulating current control device 27, since the integral term is responsible for the output of the proportional-integral controller 2501 in steady-state operation, it is possible to ensure a wide range of fluctuation allowed for the proportionality that requires immediate response in the transient state where the output is limited by the limiter. Therefore, this has an effect of achieving a high-speed response of the circulating current control device 27.

Hereinafter, effects of the third embodiment of the present invention are described in a transient phenomenon when a frequency converter is formed by connecting the DC ends of the two MMC converters 1301 and the MMC converter 1302 illustrated in FIG. 13 back-to-back, the power converter control device 25 of the third embodiment of the present invention is used instead of the power converter control device 9 of the second embodiment of the present invention, and a close-end three-phase ground fault occurs in the time chart illustrated in FIG. 14. To avoid duplication, FIGS. 13 and 14 will not be described.

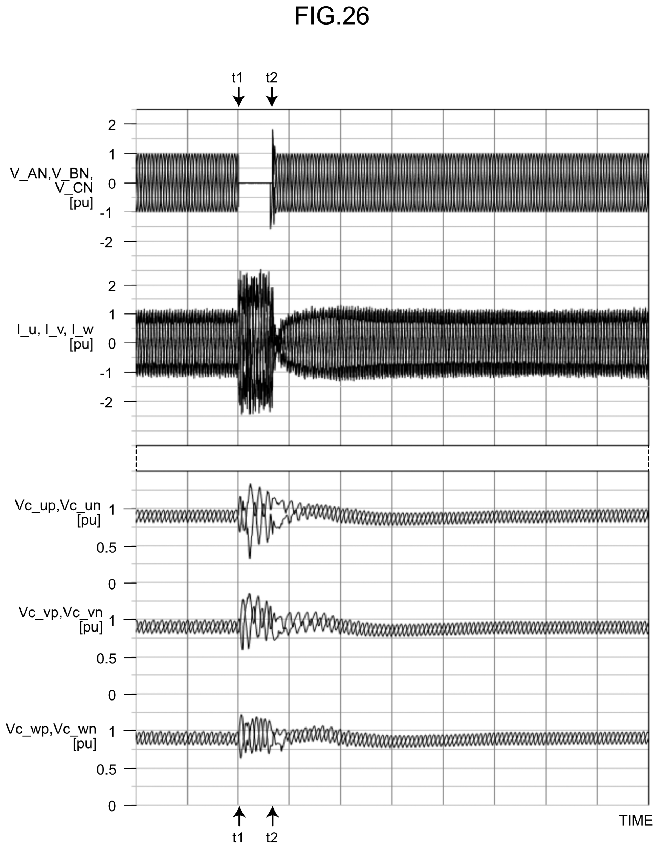

The upper part of FIG. 26 shows that the waveforms of the power transmission-line side phase voltages (V_AN, V_BN, V_CN) of the transformer 1303 and the alternating currents (I_u, I_v, I_w) on the MMC converter 1301 side are normalized with the rated value.

The lower part of FIG. 26 shows the capacitor average voltages (Vc_up, Vc_vp, Vc_wp, Vc_un, Vc_vn, Vc_wn) for each arm are normalized with the rated voltage of the capacitor.

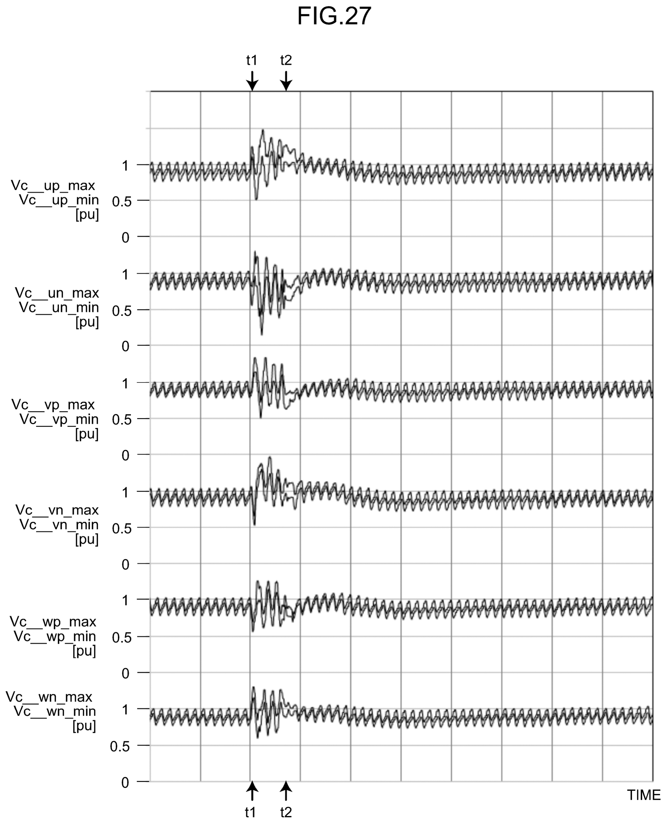

FIG. 27 shows that the maximum value and the minimum value of the capacitor 32 of the (K=6) stage unit converter 3 (see FIG. 3) constituting each arm of the MMC converter 1302 are normalized with the rated voltage of the capacitor 32.

The power transmission-line side phase voltages (V_AN, V_BN, V_CN) and the alternating currents (I_u, I_v, I_w) are not significantly different between FIG. 17 of the second embodiment and FIG. 26 of the third embodiment. Similarly, the capacitor average voltages are not significantly different between FIGS. 17 and 26, and the maximum and minimum capacitor voltages are not significantly different between FIGS. 16 and 27.

From the above, it can be seen that the third embodiment of the present invention has a similar effect to that of the second embodiment of the present invention.

According to the above configuration of the power converter control device 25, it is possible to suppress the switching current and the rise in the capacitor voltage, thereby achieving the problem.

Fourth Embodiment

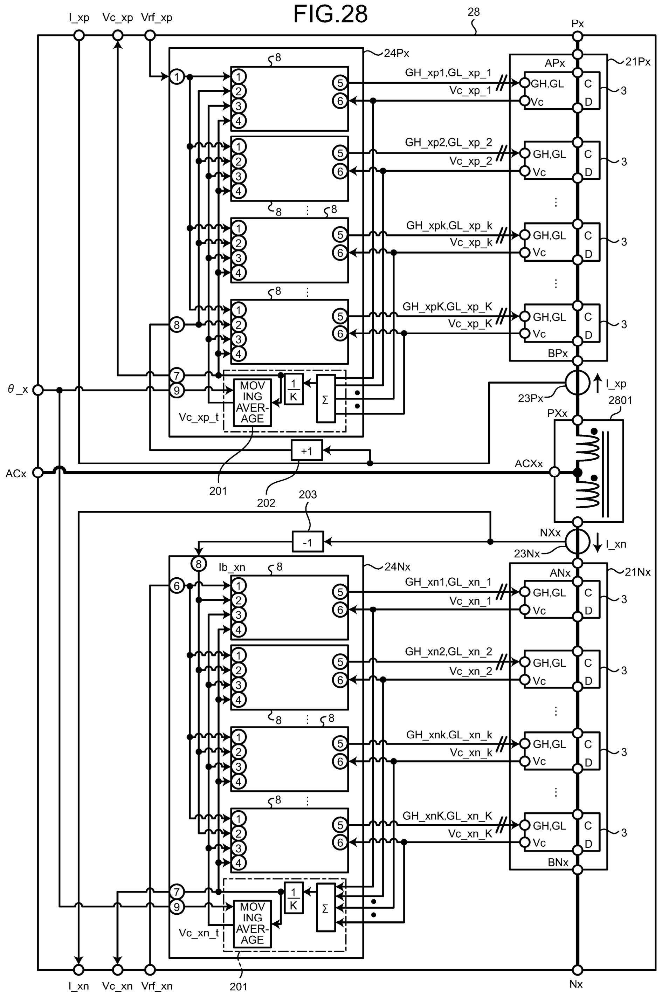

FIG. 28 is a diagram illustrating a configuration of a leg circuit 28 according to a fourth embodiment of the present invention.

The same constituent elements as those of the leg circuit 2 illustrated in FIG. 2 are denoted by the same reference signs. The constituent elements having the same reference signs as those in FIG. 2 will not be described in order to avoid duplication.

Reference sign 2801 denotes a three-terminal inductive element.

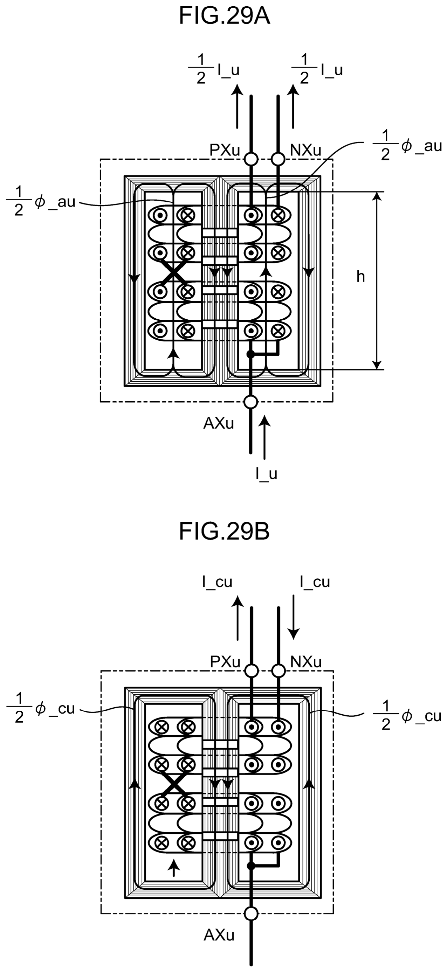

FIGS. 29A and 29B are diagrams illustrating a configuration of the three-terminal inductive element 2801 according to the present invention. FIG. 29A illustrates a case where an alternating current ($I\_u$) flows, and FIG. 29B illustrates a case where a through current ($I\_cu$) flows. The configuration of the three-terminal inductive element 2801 is based on Patent Literature 2. Hereinafter, the configuration will be described using the u-phase as an example.

As illustrated in FIG. 29A, the alternating current ($I\_u$) divided into two flows from an intermediate terminal (AXu) of the three-terminal inductive element 2801 to the positive-side winding and the negative-side winding which concentrically wind an iron-core leg with a gap, and then flows from the positive-side terminal (PXu) and the negative-side terminal (Nxu).

The magnetic flux ($\varphi\_au$) generated by the alternating current ($I\_u$) passes through the iron-core leg with a gap, and circulates through the gap surrounded by the positive-side winding and the negative-side winding.

As illustrated in FIG. 29B, the magnetic flux ($\varphi\_cu$) generated by the through current ($I\_cu$) circulates through the iron-core leg with a gap and the auxiliary iron-core leg.

The magnetic path of the magnetic flux ($\varphi\_au$) generated by the alternating current ($I\_u$) has a greater magnetic resistance than the magnetic path of the magnetic flux ($\varphi\_cu$) generated by the through current ($I\_cu$) because the gap length in the magnetic path is longer by the iron-core height (h). As a result, the inductance for the alternating current ($I\_u$) is less than the inductance for the through current ($I\_cu$), even with the same number of windings. In a design with economic rationality, the former can be 0.05 times to 0.1 times or less the latter.

In the configuration of FIGS. 29A and 29B, the positive-side winding and the negative-side winding are each wound inward by a half of the number of windings and outward by the remaining half of the number of windings to equally distribute the leakage magnetic flux (not illustrated).

As disclosed in Patent Literature 1, the inductance for the through current ($I\_cu$) is an essential inductive element for controlling the current of the MMC converter 1. The inductance for the alternating current ($I\_u$) is added to the inductance of the transformer constituting the AC power supply or the armature winding leakage inductance of the AC rotating electric machine to suppress the alternating current.

In recent years, the progress of electronic technology such as a microcomputer has been remarkable, and in most cases, an alternating current can be controlled by a specific inductance of a transformer or an AC rotating electric machine.

In the waveforms illustrated in FIGS. 15 to 22, the impedance of the transformer is 6%, and the impedance of the inductive element for the alternating current is 0.5% or less.

When the voltages that can be output by the arm power circuit are the same, the smaller the inductance of the inductive element for the alternating current, the smaller the voltage drop, and it is possible to ensure a large control voltage to be allocated to the AC control for suppressing the rise in the capacitor voltage at the time of suppressing the switching current, thereby achieving the problem.

According to the configuration of the three-terminal inductive element 2801 illustrated in FIGS. 29A and 29B, the leakage magnetic fluxes of the positive-side winding and the negative-side winding can be equalized, and the leakage inductance values can be equalized. The leakage inductance imbalance between the positive-side winding and the negative-side winding causes interference between the AC current control and the circulating current control. In addition, this causes generation of non-theoretical harmonics.

According to the configuration of the three-terminal inductive element 2801 illustrated in FIGS. 29A and 29B, there is an effect of ensuring non-interference between the AC current control and the circulating current control and suppressing generation of non-theoretical harmonics.

Reference Signs List

1, 1301, 1302 MMC converter
101 DC power supply
102 Three-phase AC power supply
103 AC sensor

2, 2u, 2v, 2w, 28 Leg circuit
21, 21Px, 21Nx Arm power circuit
22Px, 22Nx Inductive element
23, 23Px, 23Nx Current transformer
24, 24Px, 24Nx Arm control device
201 Average value calculator
202, 203, 502, 805, 1101u, 1101v, 1101w, 3205 Gain
3 Unit converter
31, 31H, 31L Self-extinguishing element
32, 3201 Capacitor
33, 33H, 33L Diode
34 Capacitor voltage detector
35 Voltage signal converter
36 Gate drive device
4, 9, 25 Power converter control device
401 Arm current calculator
402 Capacitor voltage calculator
403 Capacitor voltage regulator
404 Reactive power regulator
405 Output switcher
406 AC voltage regulator
11, 26, 407 Positive-and-negative balance control device
408, 901 Inter-leg balance control device
409, 806 Limiter
410 Arm voltage command calculator
5, 10 DC current control device
501, 801 Divider
503 DC current regulator
504 DC voltage limiter
505 DC voltage command limiter
6 AC current control device
601, 702, 1201, 1202, 2403 Three-to-two phase converter
602, 703, 1203, 2404, 2501 Proportional-integral controller
603, 704, 1204 Two-to-three phase inverter
7, 12, 27 Circulating current control device
701 Three-to-three phase converter
8 Unit converter control device
802, 803 Signal switcher
804, 3204 Current code detector
807 Comparator
808 Carrier wave output unit
809H, 809L Switching current limiter
810, 810H, 810L Pulse rise delay circuit
811H, 810L Rising detection circuit
812, 812H, 812L Pulse width securing circuit
813H, 813L OR circuit
814, 815 Comparator with hysteresis
816 Mode switcher
902, 903, 1001 Adder
1102u, 1102v, 1102w Cosine wave generator
1103u, 1103v, 1103w Multiplier
1104 Switcher
1105 Absolute value calculator
1106 Variable generator
1303 Transformer
1304 Two-circuit transmission line
1305 Synchronous machine
1306 Turbomachinery (Pump turbine)

2401u, 2401v, 2401w Moving average calculator
2402 One-cycle calculation counter
2801 Three-terminal inductive element
3202 PWM modulator
3203 Modulation command calculation circuit

**Claims**

1. A modular multi-level power converter connected between a positive-side terminal (P terminal) and a negative-side terminal (N terminal) of a direct current (DC) power supply and three-phase AC terminals (u terminal, v terminal, w terminal), the modular multi-level power converter comprising:

three three-terminal leg circuits (2u, 2v, 2w);
a power converter control device (4); and
a unit converter control device (8), wherein
the leg circuits are configured by star-connecting their positive-side terminals (Pu, Pv, Pw) to connect them to the positive-side terminal (P terminal) of the DC power supply, star-connecting their negative-side terminals (Nu, Nv, Nw) to connect them to the negative-side terminal (N terminal) of the DC power supply, and connecting their intermediate terminals (ACu, ACv, ACw) to the three-phase AC terminals,
each of the leg circuits, in which x represents the three phases (u, v, w), includes: a positive-side arm power circuit (21Px); a negative-side arm power circuit (21Nx); a positive-side inductive element (22Px); a negative-side inductive element (22Nx); a positive-side current transformer (23Px); and a negative-side current transformer (23Nx), a positive-side terminal (APx) of the positive-side arm power circuit is connected to the positive-side terminal (Px) of the leg circuit, a negative-side terminal (BPx) thereof is connected to a first terminal of the positive-side inductive element, a second terminal thereof is connected in parallel to the intermediate terminal (ACx) of the leg circuit and a first terminal of the negative-side inductive element, a second terminal of the negative-side inductive element is connected to a positive-side terminal (ANx) of the negative-side arm power circuit, a negative-side terminal (BNx) thereof is connected to the negative-side terminal (Nx) of the leg circuit, the positive-side current transformer detects arm currents (I_up, I_vp, I_wp) having a positive sign in a direction from the negative-side terminal (BPx) to the positive-side terminal (APx) of the positive-side arm power circuit to distribute and output them to a positive-side arm control device (24Px) and the power converter control device (4), the negative-side current transformer (23Nx) detects arm currents (I_un, I_vn, I_wn) having a positive sign in a direction from the positive-side terminal (ANx) to the negative-side terminal (BNx) of the negative-side arm power circuit (21Nx) to distribute and output them to a negative-side arm control device (24Nx) and the power converter control device (4),
the positive-side arm power circuit and the negative-side arm power circuit are each configured by connecting K (K is a natural number of 2 or more) two-terminal unit converters (3) in series, each of the unit converters includes: a half-bridge power circuit; and a unit converter auxiliary circuit, the half-bridge power circuit is configured by connecting a positive electrode of an upper self-extinguishing element (31H) to a positive electrode of a capacitor (32), branching and connecting a negative electrode of the upper self-extinguishing element to a positive-side terminal (C) of the unit converter and a positive electrode of a lower self-extinguishing element (31L), branching and connecting a negative electrode of the lower self-extinguishing element to a negative electrode of the capacitor and a negative-side terminal (D) of the unit converter, connecting an upper diode (33H) in antiparallel to the upper self-extinguishing element, and connecting a lower diode (33L) in antiparallel to the lower self-extinguishing element, the unit converter auxiliary circuit adjusts gate pulses of the upper self-extinguishing element and lower self-extinguishing element using PWM modulation to output a required terminal voltage, the unit converter auxiliary circuit level-converts gate control signals (GH, GL) from the positive-side arm control device and the negative-side arm control device to energize and output a gate pulse to gate terminals of the upper self-extinguishing element and the lower self-extinguishing element, and level-converts a voltage of the capacitor to output a signal to the positive-side arm control device and the negative-side arm control device,
the positive-side arm control device receives an arm voltage command (Vrf_xp) from the power converter control device and the arm current (I_xp) as a unit converter current (Ib_xp=I_xp) to distribute and output it to the unit converter control device (8) provided for each of K unit converters, and distributes and outputs an average value (Vc_xp) of K capacitor voltage signals from the positive-side arm power circuit to the power converter control device and the unit converter control device,
the negative-side arm control device distributes and outputs an arm voltage command (Vrf_xn) from the power converter control device and a unit converter current (Ib_xn=-I_xn) obtained by inverting a sign of the arm current (I_xn) to the unit converter control device, and distributes and outputs an average value (Vc_xn) of K capacitor voltage signals from the negative-side arm power circuit to the power converter control device and the unit converter control device,

the unit converter control device, in which y represents positive and negative (p, n), multiplies the arm voltage command by 1/K to obtain a unit converter voltage command, compares a capacitor voltage signal (Vc_xy_k), in which k represents each stage (1, 2, ..., K), with a capacitor average voltage signal (Vc_xy) to correct a modulation factor according to a sign (SGN) of the unit converter current, energize it to the unit converter voltage command, and obtain a modulation factor command ($\alpha$rf_xy_k), and compares the modulation factor command with a carrier wave to perform PWM modulation and output a gate control command (GH_xy_k) to the upper self-extinguishing element and a gate control command (GL_xy_k) to the lower self-extinguishing element,

the power converter control device calculates and outputs alternating currents (I_u=I_up+I_un, I_v=I_vp+I_vn, I_w=I_wp+I_wn) flowing into the intermediate terminal from the arm currents (I_up, I_vp, I_wp, I_un, I_vn, I_wn) and through currents {I_cu=1/2(I_up-I_un), I_cv=1/2(I_vp-I_vn), I_cw=1/2(I_wp-I_wn)} from the negative-side terminal (Nx) to the positive-side terminal (Px) of the leg circuit, calculates and outputs an active power component (I_aq) and a reactive power component (I_ad) by performing a three-to-two phase conversion of the alternating currents, performs a three-to-three phase conversion including a 0-phase by receiving the through currents, calculates and outputs a direct current (I_dc) flowing from the positive-side terminal using this 0-phase current, calculates and outputs the remaining two phases as circulating currents (I_c$\alpha$, I_c$\beta$) or (I_cd, I_cq) circulating inside the modular multi-level power converter, outputs a result obtained by comparing and calculating the active power component and the reactive power component of the alternating currents with two-phase AC current command values (Irf_aq, Irf_ad) and performing a two-to-three phase inversion as first voltage commands (Vrf_au, Vrf_av, Vrf_aw), branches a result obtained by comparing and calculating the direct currents with a DC current command value (Irf_dc) into three to output them as second voltage commands (Vrf_du, Vrf_dv, Vrf_dw), outputs a result obtained by comparing and calculating the circulating currents with two-phase circulating current command values (Irf_c$\alpha$, Irf_c$\beta$) or (Irf_cq, Irf_cd) and performing a two-to-three phase inversion as third voltage commands (Vrf_cu, Vrf_cv, Vrf_cw), outputs an arm voltage commands (Vrf_xp=Vrf_ax+Vrf_dx+Vrf_cx) to the positive-side arm control device by energizing the first, second, and third voltage commands independently for each phase, and outputs an arm voltage command (Vrf_xn=-Vrf_ax+Vrf_dx+Vrf_cx) to the negative-side arm control device (24Nx) by inverting a sign of the first voltage commands and energizing the second and third voltage commands for each phase,

the power converter control device (4) receives capacitor average voltage signals (Vc_up, Vc_vp, Vc_wp) from the positive-side arm control device and capacitor average voltage signals (Vc_un, Vc_vn, Vc_wn) from the negative-side arm control device to calculate and output a total arm capacitor average voltage {Vc_ave=1/6 (Vc_up+Vc_vp+Vc_wp+Vc_un+Vc_vn+Vc_wn)}, and uses a result obtained by comparing and calculating the total arm capacitor average voltage with a capacitor voltage command (Vcrf) as an active power component command value (Irf_aq) of the alternating currents, and

the unit converter control device (8) energizes the gate control command (GL_xy_k) to the lower self-extinguishing element to extinguish the gate control command to the upper self-extinguishing element regardless of the modulation factor command in a period in which the unit converter current exceeds a set value (Ib_s) of a positive sign, and energizes the gate control command (GH_xy_k) to the upper self-extinguishing element to extinguish the gate control command to the lower self-extinguishing element regardless of the modulation factor command in a period in which the unit converter current falls below a set value (-Ib_s) of a negative sign.

2. The modular multi-level power converter according to claim 1, comprising:

a positive-and-negative balance control device (11) configured to receive positive-and-negative difference voltages (Vc_pnu, Vc_pnvn, Vc_pnw), the positive-and-negative difference voltages (Vc_pnu=Vc_up-Vc_un, Vc_pnv=Vc_vp-Vc_vn, Vc_pnw=Vc_wp-Vc_wn) between a positive-side arm capacitor and a negative-side arm capacitor of each phase being output from the six capacitor average voltage signals (Vc_up, Vc_vp, Vc_wp, Vc_un, Vc_vn, Vc_wn), to perform proportional or proportional integral operation, and to output the two-phase circulating current command values (Irf_c$\alpha$, Irf_c$\beta$) or (Irf_cq, Irf_cd); and

a power converter control device (4) configured to receive inter-leg capacitor voltage imbalance (Vc_bu, Vc_bv, Vc_bw), the inter-leg capacitor voltage imbalance {Vc_bu=1/2 (Vc_up+Vc_un)-Vc_ave, Vc_bv=1/2 (Vc_vp+Vc_vnp)-Vc_ave, Vc_bw=1/2 (Vc_wp+Vc_wun)-Vc_ave} being calculated and output from the six capacitor average voltage signals and the total arm capacitor average voltage (Vc_ave) using a difference between a capacitor average voltage of the positive and negative-side arm power circuits constituting each phase leg and the total arm capacitor average voltage (Vc_ave), to calculate and output fourth voltage commands (Vrf_bu, Vrf_bv, Vrf_bw) by performing proportional or proportional integral or proportional derivative operation independently for each phase, and to energize the fourth voltage commands to the first to third voltage commands to output arm voltage commands (Vrf_up, Vrf_vp, Vrf_wpw) to the positive-side arm control device and arm voltage commands (Vrf_un, Vrf_vn, Vrf_wn) to the negative-side arm control device (24Nx).

3. The modular multi-level power converter according to claim 1 or 2, comprising an inductive element having a winding configuration in which the positive-side inductive element and the negative-side inductive element provided for each of the three-terminal leg circuits are concentrically wound for each phase to share an iron-core magnetic circuit, the iron-core magnetic circuit is magnetized by the through currents, and the iron-core magnetic circuit is demagnetized by the alternating currents.

# FIG.1

# FIG.2

# FIG.3

FIG.4

EP 4 654 456 A1

## FIG.5

## FIG.6

# FIG.7

# FIG.8

# FIG.9

# FIG.10

# FIG.11

# FIG.12

FIG.13

## FIG.14

## FIG.15

# FIG.16

## FIG.17

# FIG.18

## FIG.19

MAXIMUM VALUE OF SELF-EXTINGUISHING ELEMENT CURRENT [pu]

RANGE WHERE OPERATION CANNOT CONTINUE

SWITCHING CURRENT THRESHOLD [pu]

- ○ up
- ● un
- □ vp
- ■ vn
- △ wp
- ▲ wn

## FIG.20

MAXIMUM VALUE OF DIODE CURRENT [pu]

RANGE WHERE OPERATION CANNOT CONTINUE

SWITCHING CURRENT THRESHOLD [pu]

- ○ up
- ● un
- □ vp
- ■ vn
- △ wp
- ▲ wn

## FIG.21

MAXIMUM VALUE OF CAPACITOR VOLTAGE [pu] vs SWITCHING CURRENT THRESHOLD [pu]

RANGE WHERE OPERATION CANNOT CONTINUE

Legend: ○ up, ● un, □ vp, ■ vn, △ wp, ▲ wn

## FIG.22

CAPACITOR VOLTAGE INTRA-ARM INTER-STAGE IMBALANCE [pu] vs SWITCHING CURRENT THRESHOLD [pu]

RANGE WHERE OPERATION CANNOT CONTINUE

Legend: ○ up, ● un, □ vp, ■ vn, △ wp, ▲ wn

# FIG.23

FIG.24

# FIG.25

## FIG.26

# FIG.27

# FIG.28

## FIG.29A

## FIG.29B

FIG.30

FIG.31

FIG.32

## INTERNATIONAL SEARCH REPORT

International application No.

**PCT/JP2023/001587**

### A. CLASSIFICATION OF SUBJECT MATTER

***H02M 7/49***(2007.01)i
FI:  H02M7/49

According to International Patent Classification (IPC) or to both national classification and IPC

### B. FIELDS SEARCHED

Minimum documentation searched (classification system followed by classification symbols)

H02M7/49

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2022/059211 A1 (HITACHI MITSUBISHI HYDRO CORPORATION) 24 March 2022 (2022-03-24)<br>entire text, all drawings | 1-3 |
| A | WO 2021/182460 A1 (HITACHI, LTD.) 16 September 2021 (2021-09-16)<br>entire text, all drawings | 1-3 |
| A | WO 2018/211624 A1 (MITSUBISHI ELECTRIC CORPORATION) 22 November 2018 (2018-11-22)<br>entire text, all drawings | 1-3 |
| A | WO 2015/178376 A1 (MITSUBISHI ELECTRIC CORPORATION) 26 November 2015 (2015-11-26)<br>entire text, all drawings | 1-3 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 February 2023** | **07 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/001587**

| Patent document cited in search report | | | Publication date (day/month/year) | Patent family member(s) | | | Publication date (day/month/year) |
|---|---|---|---|---|---|---|---|
| WO | 2022/059211 | A1 | 24 March 2022 | (Family: none) | | | |
| WO | 2021/182460 | A1 | 16 September 2021 | JP | 2021-145436 | A | |
| WO | 2018/211624 | A1 | 22 November 2018 | US | 2020/0161960 | A1 | |
| | | | | EP | 3627684 | A1 | |
| WO | 2015/178376 | A1 | 26 November 2015 | US | 2017/0047860 | A1 | |
| | | | | EP | 3148067 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5189105 B
- WO 2022044091 A
- JP 5197623 B
- JP 6243083 B
- WO 2022059211 A
- JP 6618823 B
- JP 2023000883 W
- JP 6995991 B